# EUROPÄISCHE PATENTSCHRIFT

(11) **EP 2 446 580 B1**
(45) Veröffentlichungstag und Bekanntmachung des Hinweises auf die Patenterteilung: **21.05.2014**
(21) Anmeldenummer: 10726938.3
(22) Anmeldetag: 08.06.2010
(51) Int. Cl.: H04L 9/32, G09C 1/00

(54) **VORRICHTUNG UND VERFAHREN ZUR BILDUNG EINER SIGNATUR**
APPARATUS AND METHOD FOR FORMING A SIGNATURE
DISPOSITIF ET PROCÉDÉ POUR LA FORMATION D'UNE SIGNATURE

(30) Priorität: 23.06.2009 DE 102009027086
(43) Veröffentlichungstag der Anmeldung: 02.05.2012
(73) Patentinhaber: Robert Bosch GmbH, 70442 Stuttgart (DE)
(72) Erfinder: BOEHL, Eberhard, 72768 Reutlingen (DE); BOEHL, Michael, 70184 Stuttgart (DE); DUPLYS, Paulius, 72072 Tuebingen (DE)
(86) Internationale Anmeldenummer: PCT/EP2010/058000
(87) Internationale Veröffentlichungsnummer: WO 2010/149491

(56) Entgegenhaltungen:
- CN-C- 100 449 986
- US-A- 5 345 507
- US-A1- 2002 051 537
- US-A1- 2007 189 524
- US-A1- 2009 279 696
- US-B1- 6 963 976
- EBERHARD BOHL ET AL: "Nonlinear compression functions using the MISR approach for security purposes in automotive applications" ON-LINE TESTING SYMPOSIUM, 2009. IOLTS 2009. 15TH IEEE INTERNATIONAL, IEEE, PISCATAWAY, NJ, USA, 24. Juni 2009 (2009-06-24), Seiten 55-60, XP031504419 ISBN: 978-1-4244-4596-7
- CARTER JL ET AL: "Class of Easily Implemented Hash Functions" IP.COM JOURNAL, IP.COM INC., WEST HENRIETTA, NY, US, 1. Juli 1983 (1983-07-01), XP013036038 ISSN: 1533-0001

## Beschreibung

### Stand der Technik

Die Erfindung betrifft eine Vorrichtung zur Bildung einer Signatur aus einem Eingangssignal. Die Erfindung betrifft ferner ein Verfahren zur Bildung einer Signatur aus einem Eingangssignal.

Vorrichtungen und Verfahren der vorstehend genannten Art werden beispielsweise bei kryptographischen Verfahren verwendet, um Signaturen aus durch einen Benutzer vorgebbaren Eingangssignalen zu bilden. Moderne kryptographische Verfahren, beispielsweise gemäß dem AES, advanced encryption standard, sind aufgrund verhältnismäßig großer Schlüssellängen und der Komplexität des Verfahrens bei dem derzeitigen Stand der Rechentechnik üblicherweise hinreichend gut gegen "brute force"-Angriffe geschützt. Daher richten sich Attacken auf kryptographische Verfahren derzeit zunehmend auf spezifische Implementierungen, die üblicherweise durch bestimmte elektronische Schaltungen realisiert werden. Im Rahmen sogenannter Seitenkanalattacken z.B. versucht ein Angreifer, über den Stromverbrauch einer das kryptographische Verfahren realisierenden Vorrichtung Informationen zu gewinnen, die auf den von der Vorrichtung verwendeten Algorithmus oder einen geheimen Schlüssel schließen lassen. Ähnliche Rückschlüsse sind auch aus von der Vorrichtung abgestrahlten elektromagnetischen Feldern möglich.

Die US 6,963,976 B1 offenbart symmetrische, über Schlüssel authentifizierte Verschlüsselungspläne. Dabei wird ein Chiffre sicher erzeugt, welches selbst Prüfinformationen enthält, um eine Nachrichten-Integrität sicherzustellen. Ein Verfahren und eine Vorrichtung zur Realisierung einer parallelisierbaren, pseudozufälligen Funktion ist in der US 2002/0051537 A1 beschrieben. Dabei wird eine pseudozufällige Funktion mit variabler Eingabelänge aus einer pseudozufälligen Funktion mit fester Eingabelänge erstellt. Aus der US 2009/0279696 A1 sind ein Authentifizierung-System sowie ein entsprechendes Verfahren bekannt, welche auf dem Prinzip gewichteter Durchschnittswerte beruht.

Bei einem auch als differential power analysis (DPA) bezeichneten Angriffsverfahren werden operandenabhängige Stromverläufe einer Teilfunktion des kryptographischen Verfahrens bei möglichst vielen unterschiedlichen Eingangsdaten ermittelt, und unter Verwendung eines Modells des angegriffenen kryptographischen Algorithmus wird das Verfahren mit unterschiedlichen Schlüsseln einer Korrelationsanalyse unterzogen.

### Offenbarung der Erfindung

Demgemäß ist es Aufgabe der vorliegenden Erfindung, eine Vorrichtung und ein Verfahren der eingangs genannten Art dahingehend zu verbessern, dass insbesondere auf dem differential power analysis - Verfahren basierende Angriffsmethoden zur Analyse kryptographischer Algorithmen erschwert werden.

Diese Aufgabe wird bei einer Vorrichtung der eingangs genannten Art erfindungsgemäß dadurch gelöst, dass mehrere jeweils einen Zustandsautomaten aufweisende Transformationselemente vorgesehen sind, denen eingangsseitig jeweils das Eingangssignal und/oder ein von dem Eingangssignal abhängiges Signal zuführbar ist, dass alle Zustandsautomaten gleichartig sind und so ausgebildet, insbesondere initialisierbar, sind, dass jeder Zustandsautomat stets jeweils einen anderen Zustand aufweist als alle anderen Zustandsautomaten, und dass die Signatur in Abhängigkeit von Zustandsinformationen mindestens eines Zustandsautomaten bildbar ist.

Durch die erfindungsgemäße Vorsehung mehrerer jeweils einen Zustandsautomaten aufweisender Transformationselemente ist vorteilhaft sichergestellt, dass die erfindungsgemäße Vorrichtung im Gegensatz zu herkömmlichen Konfigurationen nicht allein solche Abstrahlungen von elektromagnetischen Wellen oder Zeitprofile einer elektrischen Strom- bzw. Leistungsaufnahme verursacht, wie sie bei der herkömmlichen Verwendung eines einzigen Transformationselements zur Bildung der Signatur gegeben sind. Dadurch wird eine auf statistischen Analysen basierende Angriffsmethode erschwert, weil die erfindungsgemäß vorgesehenen weiteren Transformationselemente mit ihren entsprechenden Abstrahlungen beziehungsweise zusätzlichen Zeitprofilen betreffend die Strom- bzw. Leistungsaufnahme die Gewinnung von statistisch signifikanten Informationen bezüglich des implementierten Algorithmus erschweren.

Besonders vorteilhaft ist bei einer Ausführungsform der erfindungsgemäßen Vorrichtung vorgesehen, dass die Anzahl der Transformationselemente der Zahl der maximal möglichen verschiedenen Zustände des Zustandsautomaten entspricht. D.h. in Abhängigkeit der Implementierung des Zustandsautomaten wird die Anzahl der einzusetzenden Transformationselemente gewählt. Hierdurch ist vorteilhaft sichergestellt, dass jeder Zustandsautomat der erfindungsgemäßen Vorrichtung zu einem bestimmten Betrachtungszeitpunkt einen anderen Zustand aufweist als alle anderen Zustandsautomaten, und ferner dass alle maximal möglichen verschiedenen Zustände in diesem Betrachtungszeitpunkt tatsächlich in jeweils genau einem Transformationselement der erfindungsgemäßen Vorrichtung realisiert sind. Das bedeutet, eine von außen erfolgende Analyse der erfindungsgemäßen Vorrichtung wird stets nur ergeben können, dass alle maximal möglichen Zustände gleichzeitig realisiert sind, so dass auf einer statistischen Analyse beruhende Seitenkanalattacken, insbesondere auch solche nach dem DPA-Prinzip, vollständig erfolglos bleiben, unabhängig von der Anzahl der Angriffe und der Art der verwendeten Eingangsdaten.

Bei weiteren bevorzugten Ausführungsformen der erfindungsgemäßen Vorrichtung ist das Eingangssignal den Transformationselementen parallel in Form von Datenworten vorgebbarer Länge zuführbar, und die Signatur kann als Verkettung von die Zustandsinformationen der Zustandsautomaten mehrerer Transformationselemente repräsentierenden Datenworten gebildet werden.

Unter "Signaturbildung" wird vorliegend nicht eine kryptographische Signaturbildung im Sinne der Nichtabstreitbarkeit gemeint, sondern vielmehr ganz allgemein eine Transformation der durch das Eingangssignal repräsentierten Eingangsdaten in der Signatur entsprechende Ausgangsdaten. Eine solch allgemeine Signaturbildung ist in an sich bekannter Weise mittels mehrere Eingänge aufweisender Schieberegister, MISR, multiple input shift register, möglich.

Um sicherzustellen, dass die theoretisch maximal mögliche Anzahl verschiedener Zustände durch die erfindungsgemäßen Transformationselemente realisiert wird, sind die betreffenden Zustandsautomaten so ausgebildet, dass ein Übergang von einem Ausgangszustand in einen Folgezustand in Abhängigkeit von dem Eingangssignal so erfolgt, dass für ein beliebiges vorgebbares Eingangssignal jeweils ein eindeutiger Folgezustand angenommen wird, wobei insbesondere nicht zwei verschiedene Ausgangszustände existieren, die bei demselben Eingangssignal auf denselben Folgezustand führen.

Zur Steigerung der Flexibilität bei der Bildung der Signatur ist einer weiteren vorteilhaften Ausführungsform der erfindungsgemäßen Vorrichtung zufolge vorgeschlagen, dass mehrere Gruppen von Transformationselementen vorgesehen sind, wobei allen Transformationselementen derselben Gruppe jeweils dasselbe Eingangssignal und/oder dasselbe von dem Eingangssignal abhängige Signal zuführbar ist.

Die erfindungsgemäße Einteilung der Transformationselemente in mehrere Gruppen ermöglicht vorteilhaft, eine aggregierte Signatur zu bilden, die sich aus Anteilen der Ausgangssignale der Transformationselemente der ersten Gruppe und aus Anteilen der Ausgangssignale der Transformationselemente der zweiten Gruppe zusammensetzt, wodurch die Nachvollziehbarkeit des zur Signaturbildung verwendeten Algorithmus weiter erschwert wird.

Bei der Verwendung von gleichartigen Zustandsautomaten sowohl in den Transformationselementen der ersten Gruppe als auch in den Transformationselementen einer zweiten Gruppe kann vorteilhaft den Transformationselementen der ersten Gruppe das Eingangssignal und den Transformationselementen der zweiten Gruppe ein invertiertes Eingangssignal zugeführt werden, um sicherzustellen, dass sich in den unterschiedlichen Gruppen trotz der gleichartig ausgebildeten Zustandsautomaten jeweils unterschiedliche Zustandsverläufe ergeben.

Alternativ oder ergänzend kann vorgesehen sein, dass die Zustandsautomaten von Transformationselementen, die verschiedenen Gruppen angehören, nicht gleichartig zueinander sind.

Bei einer weiteren sehr vorteilhaften Ausführungsform der erfindungsgemäßen Vorrichtung ist vorgesehen, dass mindestens ein, vorzugsweise jedoch alle, Zustandsautomaten jeweils mit einem vorgebbaren Startzustand initialisierbar sind, wodurch insbesondere sichergestellt werden kann, dass keiner der theoretisch möglichen Zustände durch zwei unterschiedliche Zustandsautomaten gleichzeitig realisiert wird. Bei einer weiteren, besonderen sicheren Ausführungsform der erfindungsgemäßen Vorrichtung ist der Startzustand in einem geheimen Speicher speicherbar und für die Initialisierung in den oder die Zustandsautomaten übertragbar. Ein geheimer Speicher kann beispielsweise dadurch realisiert sein, dass er vollständig in die erfindungsgemäße Vorrichtung integriert und sein Vorhandensein von außen nicht erkennbar ist.

Zur Erzeugung eines jeweils individuellen Anfangszustandes für die Signaturbildung kann einer weiteren sehr vorteilhaften Erfindungsvariante zufolge vorgesehen sein, dass die Zustandsautomaten nach der Initialisierung mit dem Startzustand zunächst mit einem zufallsbasierten Eingangssignal beaufschlagt werden, so dass eine nachfolgende Signaturbildung, bei der schließlich das gewünschte Eingangssignal an die Vorrichtung angelegt wird, stets von einem anderen, zufälligen Anfangszustand ausgeht.

Bei einer weiteren sehr vorteilhaften Ausführungsform der erfindungsgemäßen Vorrichtung, bei der keine geheimen Daten zur Initialisierung der Zustandsautomaten erforderlich sind, ist vorgesehen, dass alle Zustandsautomaten jeweils mit einem vorgebbaren Startzustand initialisiert werden, wobei jeder Zustandsautomat mit einem anderen individuellen Startzustand initialisiert wird. Anschließend werden die individuellen Startzustände der Zustandsautomaten untereinander permutiert, was insbesondere zufallsabhängig und/oder in Abhängigkeit von einem geheimen Schlüssel erfolgen kann.

Bei einer weiteren besonders bevorzugten Ausführungsform der erfindungsgemäßen Vorrichtung ist vorgesehen, dass die Vorrichtung zumindest teilweise in Form einer Schaltungsanordnung mit, vorzugsweise monolithisch integrierten, elektronischen und/oder optischen Bauelementen realisiert ist.

Um die von der erfindungsgemäßen Vorrichtung an die Umgebung und damit an potentielle Angreifer abgegebenen Informationen über die internen Abläufe der Signaturbildung weiter zu minimieren, kann einer sehr vorteilhaften Erfindungsvariante zufolge vorgesehen sein, dass solche Gruppen von Bauelementen und/oder sie kontaktierenden Datenleitungen, die die Transformationselemente oder deren Zustandsautomaten realisieren, gleichartig ausgebildet sind, insbesondere in Form von Wiederholstrukturen in einem mit der Schaltungsanordnung korrespondierenden Layout. Besonders bevorzugt sind alle die erfindungsgemäßen Zustandsautomaten realisierenden Bauelemente beziehungsweise Gruppen von Bauelementen räumlich möglichst dicht nebeneinander angeordnet, um die Erlangung von Informationen durch eine differentielle Analyse von Störabstrahlungen zu erschweren.

Bei einer weiteren sehr vorteilhaften Ausführungsform der erfindungsgemäßen Vorrichtung ist vorgesehen, dass mindestens ein Zustandsautomat, vorzugsweise jedoch alle Zustandsautomaten, mittels eines nichtlinear rückgekoppelten Schieberegisters, vorzugsweise mit mehreren Eingängen, realisiert ist. Ein derartiges, englisch auch als "nonlinear multiple input shift register", NLMISR, bezeichnetes Schieberegister eignet sich besonders gut zur Realisierung der erfindungsgemäßen Transformation des Eingangssignals in für die Signaturbildung erforderliche Ausgangsinformationen. Besonders zweckmäßig dient das NLMISR auch zur Realisierung der Zustandsautomaten.

Eine besonders bevorzugte Variante der Erfindung sieht vor, dass das NLMISR eine Mehrzahl von in Reihe geschalteten, vorzugsweise als Flip Flop ausgebildeten, Speicherelementen aufweist, und eine Umschalteinheit, die dazu ausgebildet ist, mindestens einen Rückkopplungszweig des NLMISR in Abhängigkeit des Eingangssignals so zu modifizieren, dass durch das NLMISR ein dem Zustand des Eingangssignals zugeordnetes Polynom realisierbar ist.

Bei dieser Erfindungsvariante wird die Zustandsinformation des durch das NLMISR realisierten Zustandsautomaten gebildet durch den Inhalt der Speicherelemente beziehungsweise Flip Flops. Beispielsweise kann ein NLMISR dazu ausgebildet sein, ein bis zu 4 Bit breites Eingangssignal zu verarbeiten und wahlweise die primitiven Polynome x⁴ + x³ + 1 und x⁴ + x +1 zu realisieren. Ein derartiges NLMISR verfügt bevorzugt über insgesamt vier Flip Flops, so dass die maximal mögliche Anzahl verschiedener Zustände des durch das NLMISR realisierten Zustandsautomaten 2⁴=16 entspricht.

Bei einer weiteren bevorzugten Ausführungsform der erfindungsgemäßen Vorrichtung ist das NLMISR dazu ausgebildet, ein bis zu 3 Bit breites Eingangssignal zu verarbeiten und wahlweise die primitiven Polynome x³ + x + 1 und x³ + x² + 1 zu realisieren.

Die erfindungsgemäße Vorrichtung zur Bildung der Signatur weist aufgrund der Vorsehung der mehreren Transformationselemente für jeden Zustandsübergang exakt den gleichen Stromverbrauch auf, so dass sich eine im Vergleich zu herkömmlichen Konfigurationen wesentlich gesteigerte Robustheit gegenüber DPA-Angriffen ergibt.

Demgegenüber geht man bei einem sog. "dual-rail"-Verfahren gemäß dem Stand der Technik davon aus, dass ein low-high Übergang eines digitalen Schaltgliedes durch einen gleichzeitig erfolgenden "high-low" Übergang kompensiert wird. Dieser herkömmliche Ansatz erfordert nachteilig jedoch ein genaues Ausbalancieren der zwei betreffenden Übergänge. Weiterhin wirken sich technologische Schwankungen z.B. der Schwellspannung eines Aufladetransistors (in CMOS: P-Kanal) gegenüber dem Entladetransistor (in CMOS: N-Kanal) so aus, dass die Balance gestört wird. Dieses Problem besteht bei dem erfindungsgemäßen Prinzip nicht.

Bei einer optimalen Implementierung der erfindungsgemäßen Vorrichtung, bei der insbesondere auch alle unterschiedliche Gruppen von Bauelementen verbindende Datenleitungen symmetrisch ausgebildet sind und sich demzufolge nur minimale Laufzeitdifferenzen zwischen den verschiedenen signalverarbeitenden Komponenten ergeben, kann die Erfolgsquote von DPA-Attacken nicht allein durch eine Steigerung der Anzahl von Messungen verbessert werden, weil die erfindungsgemäße Vorrichtung eine Stromaufnahme und Abstrahlung von elektromagnetischen Wellen aufweist, die völlig unabhängig von den internen Zuständen der signalverarbeitenden Komponenten ist.

Als eine weitere Lösung der Aufgabe der vorliegenden Erfindung ist ein Verfahren gemäß Patentanspruch 21 angegeben.

Das erfindungsgemäße Verfahren sieht vor, dass mehreren jeweils einen Zustandsautomaten aufweisenden Transformationselementen eingangsseitig jeweils das Eingangssignal und/oder ein von dem Eingangssignal abhängiges Signal zugeführt wird, dass alle Zustandsautomaten gleichartig sind und vorzugsweise so initialisiert werden, dass jeder Zustandsautomat stets jeweils einen anderen Zustand aufweist als alle anderen Zustandsautomaten, und dass die Signatur in Abhängigkeit von Zustandsinformationen mindestens eines Zustandsautomaten gebildet wird.

Durch die erfindungsgemäße Vorsehung mehrerer gleichartiger Transformationselemente und entsprechender Zustandsautomaten wird vorteilhaft die Möglichkeit erschwert, Rückschlüsse aus der elektrischen Leistungsaufnahme der erfindungsgemäß betriebenen Vorrichtung oder auch aus von der Vorrichtung abgestrahlten elektromagnetischen Wellen im Hinblick auf einen internen Verarbeitungszustand zu ziehen.

Besonders vorteilhaft werden so viele Transformationselemente verwendet, wie es maximal mögliche verschiedene Zustände des Zustandsautomaten gibt, so dass in jedem Verarbeitungszyklus der erfindungsgemäßen Vorrichtung jeweils genau ein Zustandsautomat einen möglichen Zustand aufweist, und dass insgesamt durch alle Zustandsautomaten jeder mögliche Zustand in dem Verarbeitungszyklus realisiert ist. In einem darauffolgenden Verarbeitungszyklus wechselt jeder Zustandsautomat gemäß einem durch ihn realisierten Polynom und gemäß ihm vorliegender Eingangsdaten seinen Zustand, so dass wiederum jeder Zustandsautomat der erfindungsgemäßen Vorrichtung einen der möglichen Zustände aufweist. Dies führt im Ergebnis dazu, dass auch in dem darauffolgenden Bearbeitungszyklus alle theoretisch möglichen Zustände durch genau einen Zustandsautomaten der erfindungsgemäßen Vorrichtung realisiert sind und somit aus einer Beobachtung der Strom- und/oder Leistungsaufnahme oder von Störabstrahlungen der erfindungsgemäßen Vorrichtung keine Rückschlüsse auf interne Verarbeitungsvorgänge im Rahmen der Signaturbildung gezogen werden können.

Weitere vorteilhafte Ausgestaltungen der Erfindung sind Gegenstand der Unteransprüche.

Weitere Vorteile, Merkmale und Einzelheiten ergeben sich aus der nachfolgenden Beschreibung, in der unter Bezugnahme auf die Zeichnung verschiedene Ausführungsbeispiele der Erfindung dargestellt sind. Dabei können die in den Ansprüchen und in der Beschreibung erwähnten Merkmale jeweils einzeln für sich oder in beliebiger Kombination erfindungswesentlich sein.

In der Zeichnung zeigt:
- Figur 1: eine erste Ausführungsform einer erfindungsgemäßen Vorrichtung,
- Figur 2, 3, 4: jeweils weitere Ausführungsformen der erfindungsgemäßen Vorrichtung mit mehreren Gruppen von Transformationselementen,
- Figur 5a, 5b, 5c: jeweils unterschiedliche Betriebszustände der erfindungsgemäßen Vorrichtung aus Figur 1 während eines Initialisierungsvorgangs,
- Figur 6a: eine Realisierung eines erfindungsgemäßen Zustandsautomaten in Form eines nichtlinear rückgekoppelten Schieberegisters,
- Figur 6b: eine weitere Realisierung eines erfindungsgemäßen Zustandsautomaten in Form eines nichtlinear rückgekoppelten Schieberegisters,
- Figur 7: ein modifiziertes nichtlinear rückgekoppeltes Schieberegister zur einfachen Einstellung eines Initialisierungszustands,
- Figur 8: schematisch eine stark vereinfachte Schaltungsanordnung zur Realisierung der erfindungsgemäßen Vorrichtung,
- Figur 9: einen Zustandsübergangsgraphen des nichtlinear rückgekoppelten Schieberegisters gemäß Figur 6a,
- Figur 10a, 10b: erfindungsgemäße Transformationselemente, die jeweils ein nichtlinear rückgekoppeltes Schieberegister zur Realisierung eines Zustandsautomaten aufweisen,
- Figur 10c, 10d, 10e, 10f: Schaltungsanordnungen zur Verwendung mit den Transformationselementen gemäß Figur 10a, 10b und einen Zeitverlauf von zugehörigen Betriebsgrößen,
- Figur 11a: eine Realisierung eines erfindungsgemäßen Zustandsautomaten mit einem Zustandsspeicher von fünf Bit in Form eines nichtlinear rückgekoppelten Schieberegisters,
- Figur 11b, 11c: die durch das Schieberegister gemäß Figur 11 a realisierten linear rückgekoppelten Schieberegister,
- Figur 12: einen Zustandsübergangsgraphen des nichtlinear rückgekoppelten Schieberegisters gemäß Figur 11 a,
- Figur 13: eine Realisierung eines erfindungsgemäßen Zustandsautomaten mit einem Zustandsspeicher von drei Bit in Form eines nichtlinear rückgekoppelten Schieberegisters, und
- Figur 14: einen Zustandsübergangsgraphen des nichtlinear rückgekoppelten Schieberegisters gemäß Figur 13.

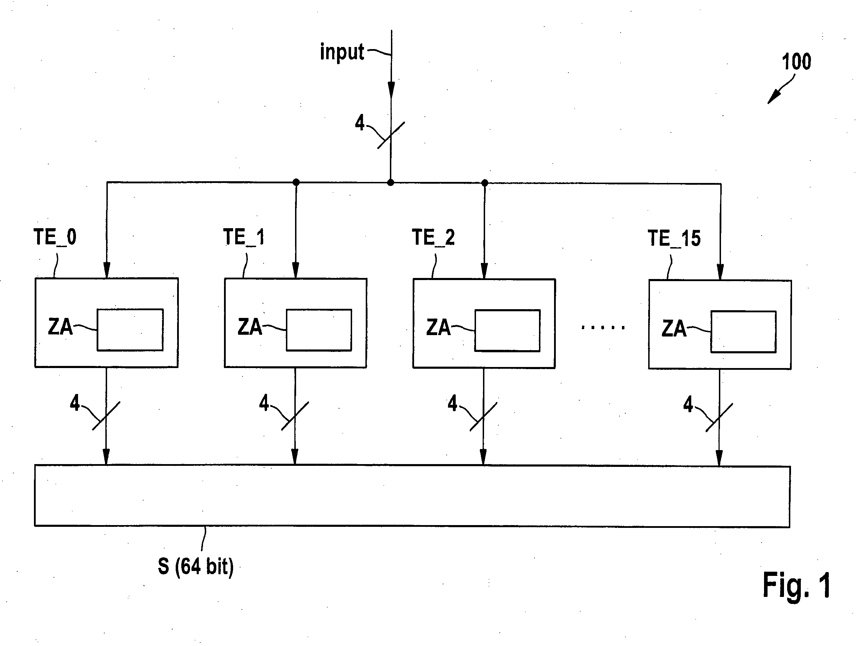

Figur 1 zeigt schematisch eine erste Ausführungsform einer erfindungsgemäßen Vorrichtung 100 zur Bildung einer Signatur S aus einem Eingangssignal input. Das Eingangssignal input wird der Vorrichtung 100 vorliegend in Form von auch als nibbles bezeichneten Halbbytes zugeführt. Hierzu sind wie aus Figur 1 ersichtlich dementsprechend vier Datenleitungen vorgesehen, die mit entsprechenden Eingängen von Transformationselementen TE_0, TE_1, TE_2, .., TE_15 verbunden sind. Es besteht immer die Möglichkeit, auch weniger Eingangsleitungen zu benutzen. Der Übersichtlichkeit halber sind in Figur 1 nur vier von insgesamt sechzehn Transformationselementen TE_0, .., TE_15 abgebildet. Die Datenverbindung ist erfindungsgemäß so realisiert, dass jedem Transformationselement TE_0, .., TE_15 dieselben Eingangsdaten input beziehungsweise dasselbe Eingangssignal zugeführt werden.

Die Transformationselemente TE_0, .., TE_15 bilden in einer nachstehend näher beschriebenen Weise aus dem ihnen zugeführten Eingangssignal input ein vorliegend nicht näher bezeichnetes Ausgangssignal. Erfindungsgemäß werden die Ausgangssignale von mehreren Transformationselementen TE_0, ..,TE_15 kombiniert, beispielsweise im Sinne einer Verkettung aneinandergereiht, um die Signatur S zu erhalten.

Da bei dem vorliegenden Beispiel jedes Transformationselement TE_0, TE_1, .. ein vier Bit breites Ausgangssignal generiert, d.h. ein nibble, ergibt sich durch die Zusammenfassung der Ausgangssignale aller sechzehn Transformationselemente eine insgesamt 64 Bit aufweisende Signatur S.

Die erfindungsgemäßen Transformationselemente TE_0, .., TE_15 weisen jeweils einen Zustandsautomaten ZA auf, dessen Zustandsinformationen beispielsweise in Form eines digitalen Datenwortes vorgebbarer Breite gespeichert sind. Beispielsweise kann der Zustandsautomat ZA eine Speicherkapazität von 4 Bit aufweisen, so dass insgesamt 16 verschiedene Zustände möglich sind.

Erfindungsgemäß sind alle Zustandsautomaten ZA der Transformationselemente TE_0, .., TE_15 gleichartig ausgebildet. Gleichartig im Sinne der vorliegenden Erfindung bedeutet, dass jeder Zustandsautomat ZA - ausgehend von identischen Eingangssignalen input und einem identischen Initialisierungszustand - denselben Folgezustand in einem nachfolgenden Verarbeitungszyklus annehmen wird wie ein anderer gleichartiger Zustandsautomat ZA.

Erfindungsgemäß ist ferner vorgesehen, dass jeder Zustandsautomat ZA stets jeweils einen anderen Zustand aufweist als alle anderen Zustandsautomaten ZA der Signaturvorrichtung 100. Dadurch werden vorteilhaft DPA-Attacken erschwert, die aus der Analyse einer elektrischen Strom- und/oder Leistungsaufnahme oder von Störabstrahlungen der erfindungsgemäßen Vorrichtung 100 versuchen, Rückschlüsse auf einen internen Verarbeitungszustand der Vorrichtung 100 beziehungsweise der einzelnen Transformationselemente TE_0, .., TE_15 zu ziehen.

Ganz besonders vorteilhaft entspricht die Anzahl der erfindungsgemäß vorgesehenen Transformationselemente TE_0, .., TE_15 der Anzahl der maximal möglichen verschiedenen Zustände des Zustandsautomaten ZA, d.h. vorliegend sechzehn. Dadurch liegt in der erfindungsgemäßen Vorrichtung 100 stets, das heißt zu jedem Verarbeitungszyklus, jeder theoretisch mögliche Zustand in genau einem der Zustandsautomaten ZA vor, so dass nach außen, das heißt gegenüber einem möglichen Angreifer, der eine DPA-Attacke durchführt, jeweils nur eine Kombination aller sechzehn möglichen Zustände "sichtbar" ist.

Auch in einem darauffolgenden Verarbeitungszyklus, bei dem zwar die einzelnen Zustandsautomaten ZA jeweils ihren Zustand entsprechend einer vorgegebenen Regel ändern, liegt wiederum insgesamt in jedem der 16 Zustandsautomaten ZA genau einer der 16 möglichen Zustände vor, so dass nach außen wiederum alle 16 Zustände gleichzeitig "sichtbar" sind.

Das bedeutet, ein möglicher Angreifer kann aus einer entsprechenden elektromagnetischen Abstrahlung, die bei einer üblichen Realisierung der erfindungsgemäßen Vorrichtung 100 mit Hilfe von elektronischen Bauelementen gegeben ist, oder auch aus einer elektrischen Leistungsaufnahme der Vorrichtung 100, nicht auf einen Zustand der internen Signalverarbeitung in den Transformationselementen TE_0, .., TE_15 schließen, weil bei einer ideal symmetrischen Auslegung aller Komponenten die elektrische Leistungsaufnahme stets konstant ist, und das abgestrahlte elektromagnetische Feld jeweils keine signifikanten Änderungen bei einem Zustandswechsel zwischen aufeinanderfolgenden Verarbeitungszyklen erfährt.

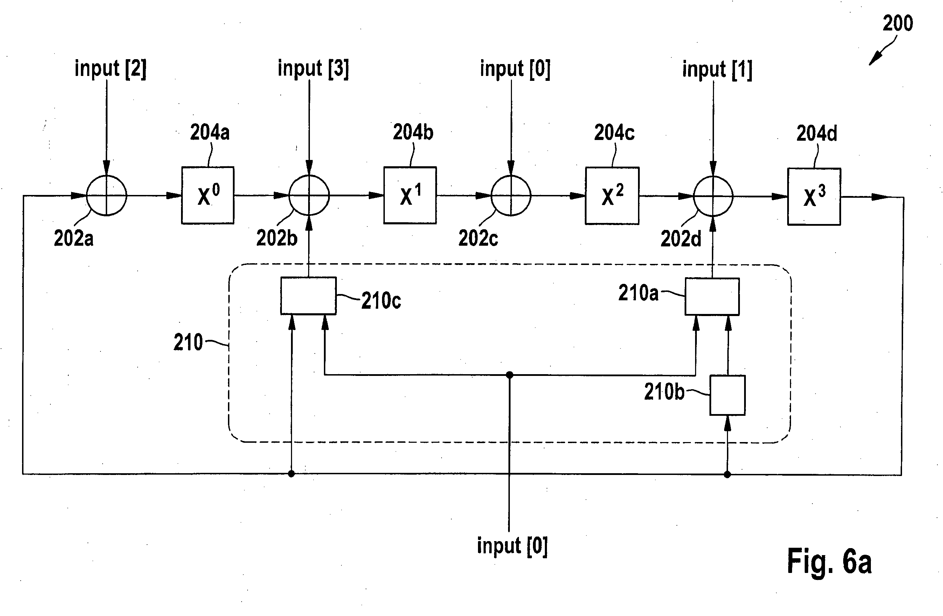

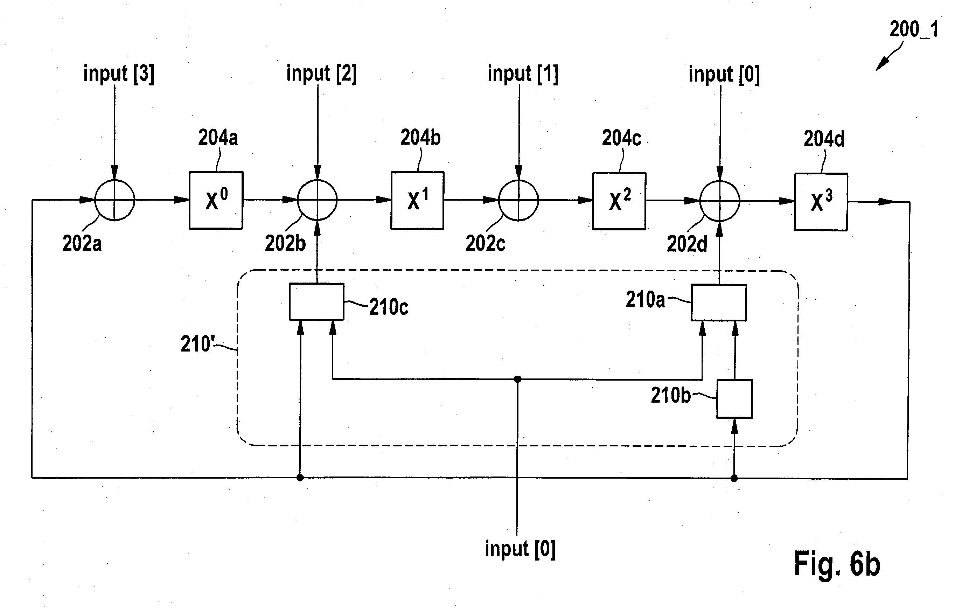

Neben dem sich beispielsweise synchron zu einem Taktsignal, das aufeinanderfolgende Verarbeitungszyklen definiert, ändernden Eingangssignal input wirkt in an sich bekannter Weise auch der jeweilige aktuelle Zustand des betreffenden Zustandsautomaten ZA zur Bildung eines Folgezustands mit. Beispiele hierfür sind weiter unten unter Bezugnahme auf Figur 6a, 6b angegeben. Das bedeutet, nach jedem Verarbeitungszyklus liegen an einem Ausgang eines Transformationselements TE_0, .. vier Bit aufweisende Ausgangsdaten vor, die in Abhängigkeit der Eingangsdaten input und der Zustandsinformationen des betreffenden Zustandsautomaten ZA gebildet worden sind.

Eine Verknüpfung der Ausgangssignale aller Zustandsautomaten ZA beziehungsweise der sie enthaltenden Transformationselemente TE_0, .., TE_15, die beispielsweise im Sinne einer Verkettung durchgeführt werden kann, ergibt schließlich eine 64 Bit aufweisende Signatur S.

In einem darauffolgenden Verarbeitungszyklus der erfindungsgemäßen Signaturvorrichtung 100 ändern sich die Ausgangssignale der beteiligten Transformationselemente TE_0, .., TE_15 wiederum entsprechend, so dass dann auch eine andere Signatur S vorliegt.

Obwohl die Vorsehung einer solchen Zahl von Transformationselementen besonders zweckmäßig ist, die der maximal möglichen Anzahl verschiedener Zustände der verwendeten Zustandsautomaten ZA entspricht, ist es erfindungsgemäß auch möglich, die erfindungsgemäße Vorrichtung 100 mit einer geringeren Anzahl von Transformationselementen, beispielsweise mit insgesamt nur drei Transformationselementen, zu versehen. Auch in diesem Fall ist bereits vorteilhaft eine DPA-Attacke erschwert, weil sich die unterschiedlichen Signale beziehungsweise Leistungsaufnahmen der insgesamt drei Transformationselemente überlagern und sich somit die Signifikanz des durch einen Angreifer detektierbaren Signals bezüglich der Signalverarbeitung in der Signaturvorrichtung 100 verringert.

Sofern Signaturen S mit einer anderen Länge als 64 Bit gewünscht werden, kann beispielsweise auch jeweils nur eine Teilmenge der Ausgangssignale der vorhandenen Transformationselemente TE_0, .., TE_15 verwendet werden.

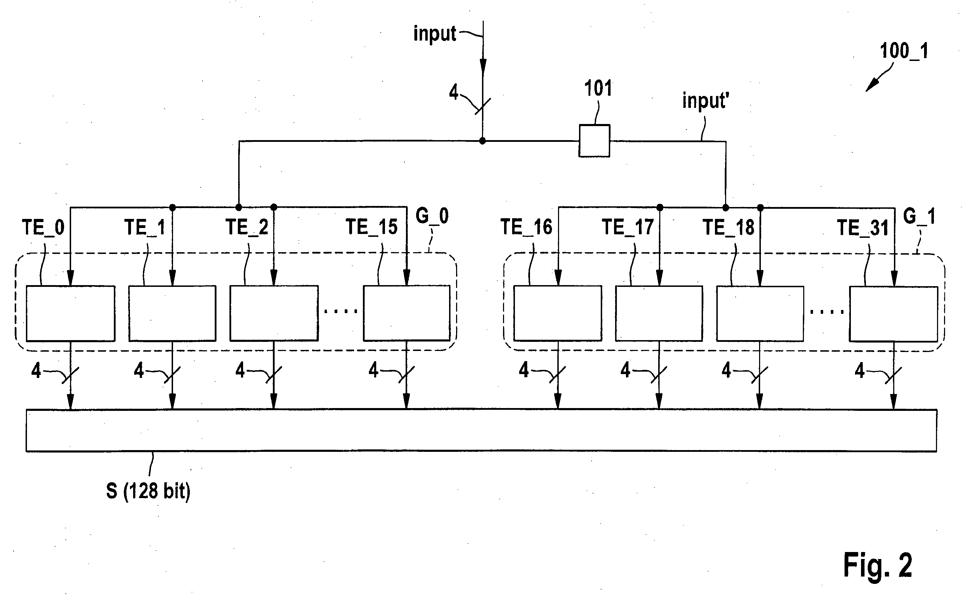

Figur 2 zeigt eine weitere Ausführungsform 100_1 der erfindungsgemäßen Signaturvorrichtung, bei der zwei Gruppen G_0, G_1 von Transformationselementen vorgesehen sind.

Jede Gruppe G_0, G_1 weist insgesamt 16 verschiedene Transformationselemente TE_0, .., TE_15 beziehungsweise TE_16, .., TE_31 auf, die alle gleichartig ausgebildet sind und über gleichartig ausgebildete Zustandsautomaten verfügen. Die Zustandsautomaten sind der Übersichtlichkeit halber nicht in Figur 2 abgebildet.

Die erste Gruppe G_0 von Transformationselementen gemäß Figur 2 realisiert eine erfindungsgemäße Signaturbildung vergleichbar zu dem vorstehend unter Bezugnahme auf Figur 1 erläuterten Prinzip.

Die zweite Gruppe G_1 von Transformationselementen arbeitet in vergleichbarer Weise, erhält jedoch als Eingangssignal nicht das reguläre Eingangssignal input, das den Transformationselementen TE_0,.., TE_15 der ersten Gruppe G_0 zugeführt wird. Die der zweiten Gruppe G_1 angehörenden Transformationselemente TE_17, .., TE_31 erhalten als Eingangssignal vielmehr ein invertiertes Eingangssignal input', das durch den Inverter 101 aus dem regulären Eingangssignal input erhalten wird. Beispielsweise kann jedes Bit der das Eingangssignal input bildenden nibbles für sich durch den Inverter 101 invertiert werden, um das invertierte nibble input' zu bilden.

Durch die in Figur 2 veranschaulichte Erfindungsvariante werden vorteilhaft zueinander komplementäre beziehungsweise inverse Eingangssignale input, input' von den Gruppen G_0, G_1 verarbeitet, so dass sich Änderungen des Eingangssignals input dementsprechend kompensieren. Diese Kompensation ist insbesondere dann von Vorteil, wenn das Eingangssignal input selbst nicht bekannt ist und auch vor einem möglichen Angreifer geheimgehalten werden soll. Insgesamt ergibt sich durch die Signaturvorrichtung 100_1 gemäß Figur 2 eine maximale Signaturlänge von 128 Bit.

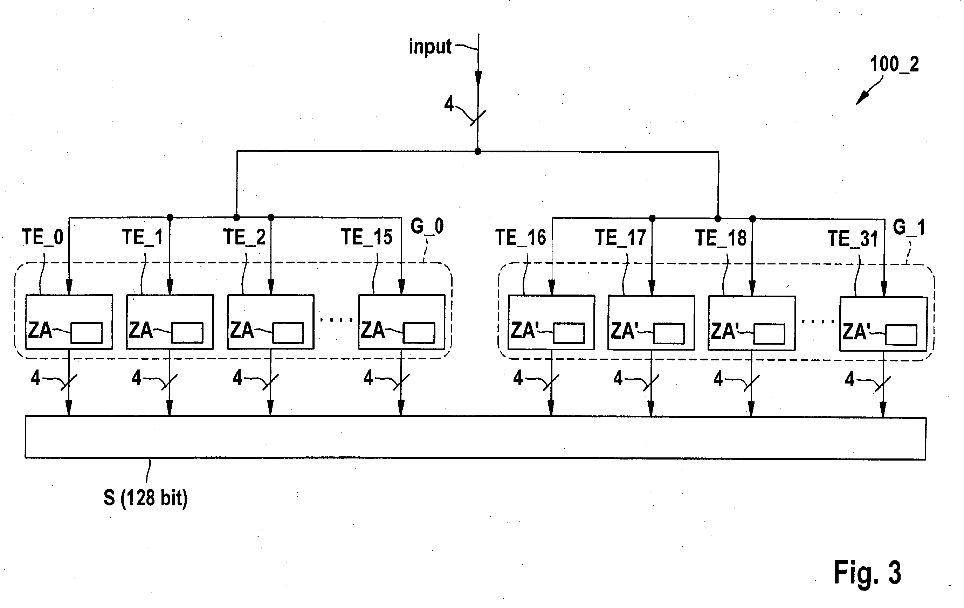

Figur 3 zeigt eine weitere Ausführungsform 100_2 der erfindungsgemäßen Signaturvorrichtung, bei der wiederum zwei Gruppen G_0, G_1 von Transformationselementen vorgesehen sind.

Im Unterschied zu der vorstehend unter Bezugnahme auf Figur 2 beschriebenen Erfindungsvariante wird beiden Gruppen G_0, G_1 der in Figur 3 abgebildeten Signaturvorrichtung 100_2 dasselbe Eingangssignal input zugeführt. Die Erzeugung von unterschiedlichen Ausgangssignalen durch die Transformationselemente TE_16, .., TE_31 der zweiten Gruppe G_1 ist vorliegend dadurch gewährleistet, dass die Zustandsautomaten ZA' der der zweiten Gruppe G_1 zugehörenden Transformationselemente andersartig ausgebildet sind als die Zustandsautomaten ZA der Transformationselemente der ersten Gruppe G_0. Durch die Kombination aller Ausgangssignale der beteiligten Transformationselemente ergibt sich wiederum vorteilhaft eine Signatur mit der Länge von 128 Bit.

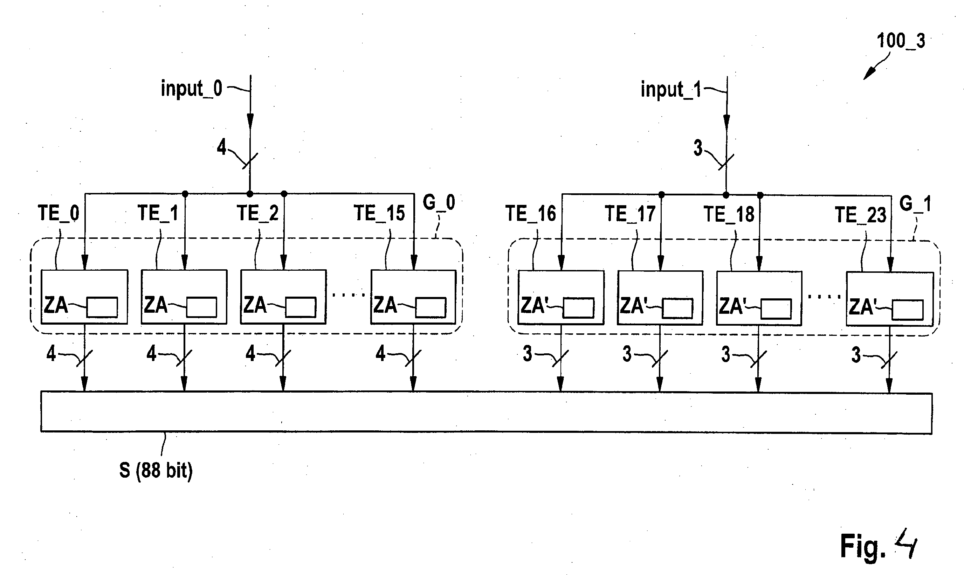

Figur 4 zeigt eine weitere Ausführungsform 100_3 der erfindungsgemäßen Signaturvorrichtung. Bei dieser Ausführungsform werden der zweiten Gruppe G_1 von Transformationselementen, die vorliegend nur acht anstelle von bisher sechzehn Transformationselementen aufweist, Eingangssignale input_1 in Form von 3 Bit aufweisenden Datenworten zugeführt. Die Zustandsautomaten ZA' erzeugen Ausgangssignale mit einer Wortbreite von ebenfalls 3 Bit. Insgesamt kann aus den Ausgangssignalen der beteiligten Transformationselemente TE_0, .., TE_23 eine Signatur mit einer maximalen Länge von 88 Bit erhalten werden.

Die Zustandsautomaten ZA' der zweiten Gruppe G_1 von Transformationselementen können entgegen der Abbildung aus Figur 4 auch gleichartig zu den Zustandsautomaten ZA der ersten Gruppe G_0 ausgebildet werden, und liefern dennoch unterschiedliche Ausgangssignale, weil ihnen ein zweites Eingangssignal input_1 zugeführt wird, das sich von dem ersten Eingangssignal input_0 für die erste Gruppe G_0 unterscheidet. Da jedoch vorliegend die Zustandsautomaten ZA der ersten Gruppe G_0 vier Speicherelemente enthalten und die Zustandsautomaten ZA' der zweiten Gruppe G_1 nur drei Speicherelemente, werden dann nicht alle möglichen Anfangszustände in der Gruppe G_1 realisiert, was man durch das Hinzufügen von bis zu acht weiteren Transformationselementen zu der zweiten Gruppe G_1 ändern kann.

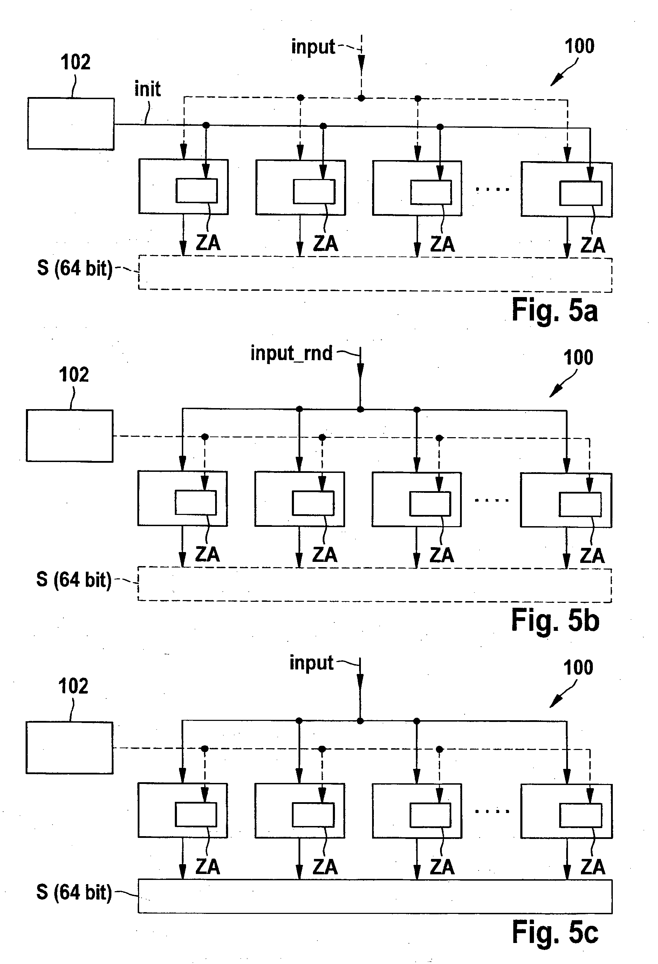

Nachstehend ist unter Bezugnahme auf die Figuren 5a, 5b, 5c ein Initialisierungsvorgang der erfindungsgemäßen Signaturvorrichtung 100 beschrieben. Hierbei wird von einer Grundstruktur der Signaturvorrichtung 100 gemäß Figur 1 ausgegangen.

Für die Initialisierung der Signaturvorrichtung 100 werden in einem ersten Schritt, vergleiche Figur 5a, alle Zustandsautomaten ZA der vorliegend nicht näher bezeichneten Transformationselemente mit einem vorgebbaren Startzustand init initialisiert. Besonders bevorzugt wird hierbei jeder Zustandsautomat ZA mit einem anderen individuellen Startzustand initialisiert als die restlichen Zustandsautomaten ZA, das bedeutet, jeder der insgesamt 16 Zustandsautomaten ZA der Signaturvorrichtung 100 gemäß Figur 5a wird mit einem unikaten Startzustand initialisiert.

Dieser individuelle Startzustand wird vorliegend aus einem geheimen Speicher 102 abgerufen und während der Initialisierung in die Zustandsspeicher der Zustandsautomaten ZA übertragen.

Der Zustand des Eingangssignals input ist während des vorstehend beschriebenen Schrittes der Initialisierung nicht maßgeblich, daher sind die entsprechenden Signalflüsse durch gestrichelte Linien gekennzeichnet. Ebenso liegt zu diesem Zeitpunkt noch kein sinnvoller Signaturwert S an den Ausgängen der Transformationselemente an.

In einem zweiten Schritt, vergleiche Figur 5b, wird jeder Zustandsautomat ZA mit einem zufallsbasierten Eingangssignal input_rnd beaufschlagt. Dadurch wird vorteilhaft gewährleistet, dass sich jeder Zufallsautomat ZA für die nachfolgende Signaturbildung in einem anderem Ausgangszustand befindet, als er beispielsweise bei einer vorangehenden Signaturbildung oder direkt nach der Initialisierung vorlag.

Das bedeutet, obwohl der geheime Speicher 102 einen über die Lebensdauer der Signaturvorrichtung 100 konstanten Startzustand für die individuelle Initialisierung der Zustandsautomaten enthält, kann für jeden Betriebszyklus der Signaturvorrichtung 100 unter Verwendung der zufallsbasierten Eingangssignale input_rnd ausgehend von den gespeicherten Startzuständen init (Figur 5a) ein neuer, zufallsbestimmter Ausgangszustand erreicht werden.

Die Beaufschlagung der Zustandsautomaten ZA mit zufallsbasierten Eingangssignalen input_rnd kann für einen oder mehrere Verarbeitungszyklen erfolgen. Während dieser Verarbeitungszyklen liegt ebenfalls nicht bereits eine gültige Signatur S vor, die spezifischen Eingangsdaten input zugeordnet ist.

Erst zu dem in Figur 5c gezeigten Betriebszustand, bei dem die Signaturvorrichtung 100 mit einem regulären Eingangssignal input beaufschlagt wird, liegt an den Ausgängen der Transformationselemente eine durch die Zustandsautomaten ZA generierte Signatur S an.

Figur 6a zeigt eine vereinfachte Schaltungsanordnung eines nichtlinear rückgekoppelten Schieberegisters 200, das mehrere Eingänge input[0], input[1], input[2], input[3] aufweist, mit denen verschiedene Bits des Eingangssignals input verbunden werden können. Wie aus Figur 6a ersichtlich ist, besitzt das kurz auch als NLMISR, nonlinear multiple input shift register, bezeichnete Schieberegister 200 eine Mehrzahl von in Reihe geschalteten, vorzugsweise als Flip Flop ausgebildeten Speicherelementen 204a, 204b, 204c, 204d. Die Speicherelemente 204a, 204b, 204c, 204d sind untereinander in an sich bekannter Weise durch Antivalenzglieder 202a, 202b, 202c, 202d verknüpft, die eine Modulo-2-Addition der ihnen zugeführten Eingangsgrößen durchführen.

Das nichtlinear rückgekoppelte Schieberegister 200 weist eine Umschalteinheit 210 auf, die vorteilhaft einen variablen Rückkopplungszweig realisiert. In Abhängigkeit des Eingangssignals input[0] und des Zustands bzw. Ausgangssignals des Speicherelements 204d modifiziert die Umschalteinheit 210 einen Rückkopplungsmechanismus des Schieberegisters 200 derart, dass wahlweise ein erstes primitives Polynom oder auch ein zweites primitives Polynom durch das Schieberegister 200 realisiert wird. In die Umschalteinheit 210 können auch die anderen Eingangssignale input[1], .., input[3] einfließen.

Besonders bevorzugt ist das nichtlinear rückgekoppelte Schieberegister 200 vorliegend dazu ausgebildet, ein insgesamt 4 Bit breites Eingangssignal input (Figur 1) zu verarbeiten, dessen Bitkomponenten mit den Eingängen input[0], input[1], input[2], input[3] korrespondieren.

Bei der in Figur 6a abgebildeten Konfiguration der Umschalteinheit 210 wirkt das Ausgangssignal des Speicherelements 204d und das Eingangssignal input[0] auf ein UND-Glied 210c, dessen Ausgangssignal wiederum auf das Antivalenzglied 202b wirkt. Ferner wirkt das Eingangssignal input[0] und ein invertiertes Ausgangssignal des Speicherelements 204d auf einen Funktionsblock 210a, der eine ODER-Verknüpfung realisiert. Wie aus Figur 6a ersichtlich ist, wird das Ausgangssignal des Funktionsblocks 210a auf das Antivalenzglied 202d geführt. Das invertierte Ausgangssignal des Speicherelements 204d wird vorliegend durch den Inverter 210b erhalten.

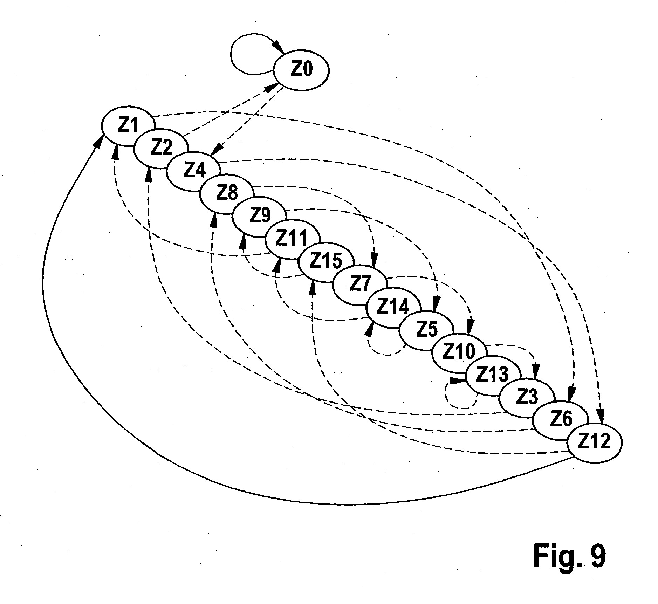

Aufgrund der vorstehend beschriebenen Schaltungskonfiguration der Umschalteinheit 210 realisiert das nichtlinear rückgekoppelte Schieberegister 200 in Abhängigkeit des Eingangssignals input[0] wahlweise das primitive Polynom x⁴ + x³ + 1 und x⁴ + x+1. Dadurch ergeben sich vorteilhaft die schematisch in Figur 9 abgebildeten Zustände beziehungsweise Zustandsübergänge für einen mittels des Schieberegisters 200 realisierten Zustandsautomaten.

Die insgesamt sechzehn verschiedenen möglichen Zustände Z0 Z1, .., Z15 sind in Figur 9 durch entsprechend bezeichnete Ellipsen symbolisiert. Die Ordnungszahl eines Zustands entspricht hierbei einer dezimalen Repräsentation des durch die Speicher 204a, .., 204d des Schieberegisters 200 repräsentierten nibbles, wenn das niederwertigste Bit (least significant bit, LSB) in dem Speicherelement 204a und das höchstwertige Bit (most significant bit, MSB) in dem Speicherelement 204d gespeichert ist.

Zustandsübergänge zwischen den verschiedenen Zuständen sind mit gestrichelten Pfeilen und mit durchgezogenen Pfeilen symbolisiert. Dabei geben gestrichelte Pfeile einen Zustandsübergang an, der sich infolge eines Eingangssignalwerts des Eingangssignals input[0] von Eins ergibt, während durchgezogene Pfeile solche Zustandsübergänge angeben, die sich infolge eines Eingangssignalwerts von Null ergeben. Für die in Figur 9 dargestellten Zustandsübergänge wird davon ausgegangen, dass die Eingangssignale input[1] = input[2] = input[3] = 0 sind.

Ferner ist in Figur 9 ein Zustandsübergang von einem Ausgangszustand in einen Folgezustand aufgrund eines Eingangssignalwerts von Null - anstelle eines durchgezogenen Pfeils - auch dadurch gekennzeichnet, dass sich die den Ausgangszustand und den Folgezustand repräsentierenden Ellipsen teilweise überlappen, wobei ein Folgezustand in Figur 9 jeweils direkt rechts unterhalb des ihm zugeordneten Ausgangszustands liegt. Beispielsweise wechselt der durch das nichtlinear rückgekoppelte Schieberegister 200 gemäß Figur 6a realisierte Zustandsautomat von einem Ausgangszustand Z1 in den Folgezustand Z2 dann, wenn das Eingangssignal input[0] einen Wert von Null aufweist. Der Zustandsautomat wechselt demgegenüber dann von dem Ausgangszustand Z1 in den weiteren Folgezustand Z6, wenn das Eingangssignal input[0] einen Wert von Eins aufweist, vergleiche den gestrichelten Pfeil, der von dem Ausgangszustand Z1 ausgeht und auf den Folgezustand Z6 deutet.

Durch die Konfiguration des nichtlinear rückgekoppelten Schieberegisters 200 gemäß Figur 6a ist vorteilhaft sichergestellt, dass ein Übergang in einen Folgezustand in Abhängigkeit von den Eingangssignalen genau so erfolgt, dass für eine beliebige feste Belegung des Eingangssignals ein eindeutiger Folgezustand eingenommen wird, und dass es nicht zwei verschiedene Zustände gibt, die bei gleicher Belegung des Eingangssignals zu dem gleichen Folgezustand führen. Jeder der in Figur 9 abgebildeten möglichen Zustände des durch das Schieberegister 200 gemäß Figur 6a realisierten Zustandsautomaten hat somit bei einem konstanten Eingangssignal genau einen Nachfolgezustand und genau einen Vorgängerzustand für jeweils ein konstantes Eingangssignal.

Dadurch ist - in Kombination mit der vorstehend unter Bezugnahme auf die Figuren 5a, 5b, 5c beschriebenen Initialisierung - vorteilhaft sichergestellt, dass jeder Zustandsautomat ZA der Signaturvorrichtung 100 (Figur 1) zu jedem Verarbeitungszyklus einen Zustand aufweist, der von den Zuständen aller anderen Zustandsautomaten ZA in demselben Verarbeitungszyklus verschieden ist.

Figur 6b zeigt eine weitere Ausführungsform eines nichtlinear rückgekoppelten Schieberegisters 200_1, das sich zur Durchführung des erfindungsgemäßen Verfahrens in besonderer Weise eignet.

Dem in Figur 6b abgebildeten Schieberegister 200_1 sind die Eingangssignale input[0], input[1], input[2], input[3] abweichend von der unter Bezugnahme auf Figur 6a beschriebenen Weise zugeführt.

Das in Figur 6a veranschaulichte nichtlinear rückgekoppelte Schieberegister 200 kann beispielsweise zur Implementierung einer ersten Gruppe G_0 von Transformationselementen mit einem in erster Weise ausgebildeten Zustandsautomaten verwendet werden, während das nichtlinear rückgekoppelte Schieberegister 200_1 gemäß Figur 6b beispielsweise zur Ausbildung eines Zustandsautomaten ZA' für die zweite Gruppe G_1 von Transformationselementen gemäß Figur 3 geeignet ist.

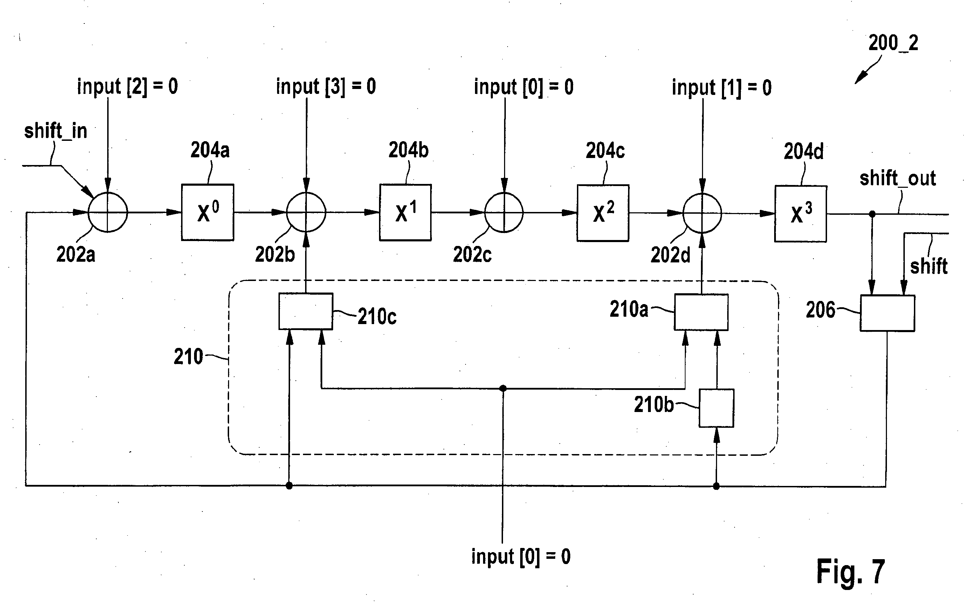

Figur 7 zeigt ein nichtlinear rückgekoppeltes Schieberegister 200_2 mit einer gegenüber den Figuren 6a, 6b modifizierten Schaltungstopologie. Das in Figur 7 abgebildete nichtlinear rückgekoppelte Schieberegister 200_2 weist zusätzlich einen Funktionsblock 206 auf, der eine NOR-Verknüpfung realisiert zwischen dem Ausgangssignal out des Speicherelements 204d und einem Steuersignal shift.

Dadurch ist es möglich, in Abhängigkeit von einem logischen Zustand des Steuersignals shift die Rückkopplung für das nichtlinear rückgekoppelte Schieberegister 200_2 gemäß Figur 7 zu aktivieren beziehungsweise zu deaktivieren.

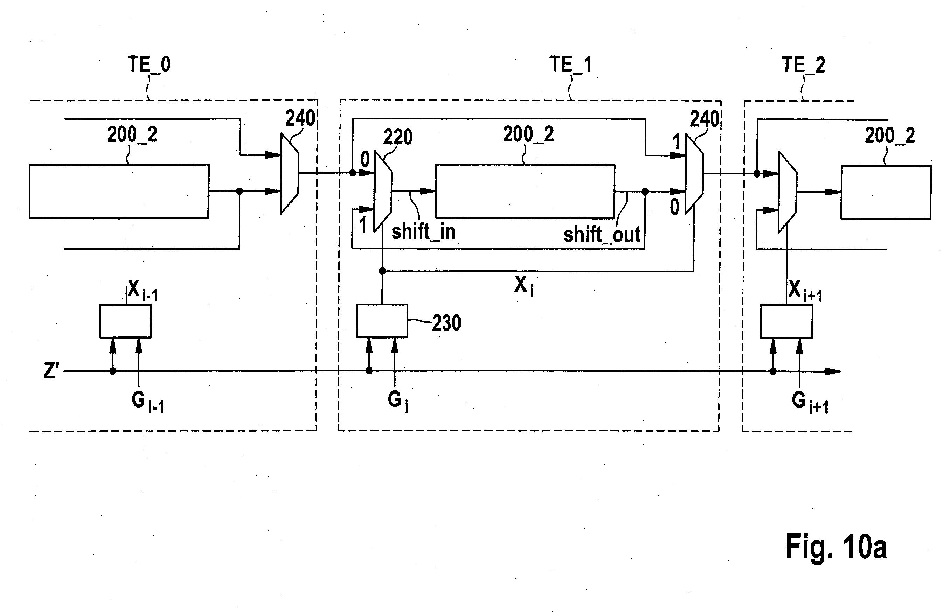

Dies ist insbesondere dann von Vorteil, wenn im Rahmen der Initialisierung der Signaturvorrichtung 100 beziehungsweise ihrer Zustandsautomaten ZA kein in einem geheimen Speicher 102 (Figur 5a) abgespeicherter Startzustand verwendet werden soll. Vielmehr kann durch entsprechende Auswahl des Zustands des Steuersignals shift und eine nachstehend mit Bezug auf Figur 10a näher beschriebene besondere Verschaltung der mehreren Zustandsautomaten ZA der erfindungsgemäßen Signaturvorrichtung 100 im Sinne eines Ringspeichers eine Permutation von Zustandswerten zwischen den Zustandsautomaten erfolgen, so dass kein geheimer Speicher 102 vorgesehen werden muss, was sich positiv auf die Fertigungskosten auswirkt.

Figur 10a zeigt hierzu eine Schaltungsanordnung für ein erfindungsgemäßes Transformationselement TE_1, das einen als nichtlinear rückgekoppeltes Schieberegister 200_2 gemäß Figur 7 ausgebildeten Zustandsautomaten aufweist. Neben dem Schieberegister 200_2 weist das Transformationselement TE_1 einen Eingangsmultiplexer 220, einen Funktionsblock 230, und einen Ausgangsmultiplexer 240 auf. Die abgebildete Konfiguration des Transformationselements TE_1 erlaubt es, das Transformationselement TE_1 zusammen mit den gleichartig ausgebildeten weiteren Transformationselementen TE_0, TE_2, .. zu einem ringförmigen Schieberegister zu verbinden, wobei sich der Eingangsmultiplexer 220 eines jeden Transformationselements zwischen dem Schieberegister 200_2 des betrachteten Transformationselements TE_1 und dem Ausgangsmultiplexer 240 eines in der Ringstruktur vorangehenden Transformationselements TE_0 befindet.

Unter Verwendung des vorstehend unter Bezugnahme auf Figur 7 beschriebenen Steuersignals shift werden für alle Transformationselemente die Rückkopplungsmechanismen deaktiviert, so dass je Verarbeitungszyklus die in dem ringförmigen Schieberegister gespeicherten Bits jeweils verschoben, nicht jedoch - z.B. im Sinne einer Signaturbildung - modifiziert werden. Das die Multiplexer 220, 240 der i-ten Stufe des ringförmigen Schieberegisters TE_0, TE_1, .. steuernde Bit Xᵢ sollte dabei wie aus Figur 10a ersichtlich sowohl von einem zufallsabhängigen Bit Z' als auch von mindestens einem Bit Gᵢ eines geheimen Schlüssels abhängig sein. Alle Xᵢ-Werte werden gleichzeitig angelegt und jeweils für vier Verarbeitungszyklen konstant gehalten. Das Bit Xᵢ entscheidet jeweils, ob das betreffende nichtlinear rückgekoppelte Schieberegister 200_2 Bestandteil des großen Schieberegisterrings ist, oder ob es übersprungen wird. Je nach dem Wert von Xᵢ liegt nach den vorstehend beschriebenen vier Verarbeitungszyklen in den vier Speicherelementen 204a, 204b, 204c, 204d des nichtlinear rückgekoppelten Schieberegisters 200_2 (Figur 7) entweder der vorhergehende Zustandswert vor, oder ein Zustandswert eines in dem Schieberegisterring vorangehenden nichtlinear rückgekoppelten Schieberegisters 200_2. Mit jeweils wechselnden Werten für Xᵢ liegt nach einer bestimmten Anzahl von Verarbeitungszyklen vorteilhaft eine zufällige und für einen möglichen Angreifer unbekannte Permutation der Startzustände der Zustandsautomaten vor.

Beispielsweise kann der das Bit Xᵢ bildende Funktionsblock 230 als UND-Glied ausgebildet sein, so dass sich unter Annahme verschwindender Eingangssignale, d.h. input[0]=input[1]=input[2]=input[3]=0, und mittels des Steuersignals shift (Figur 7) deaktivierter interner Rückkopplung je Schieberegister 200_2 folgende Szenarien ergeben:

### Zufallsbit Z'=0:

Alle Flip Flops 204a, 204b, 204c, 204d aller Schieberegister 200_2 der Signaturvorrichtung 100 sind in einer Ringtopologie miteinander verschaltet, so dass der Zustand eines Flip Flops 204a des - bezogen auf die Ringtopologie - n-ten Schieberegisters in einem nachfolgenden Verarbeitungszyklus dem Zustand des Flip Flops 204d des (n-1)-ten Schieberegisters entspricht usw. Der Zustandswert des Flip Flops 204d des letzten, d.h. vorliegend des sechzehnten, Schieberegisters 200_2, das dem Transformationselement T_15 (Figur 1) angehört, wird dementsprechend bei einem Zykluswechsel verschoben in das Flip Flop 204a des ersten Schieberegisters 200_2, das dem Transformationselement T_0 (Figur 1) angehört.

### Zufallsbit Z'=1 und Bit Gᵢ des geheimen Schlüssels = 1:

Da das betrachtete Schieberegister 200_2 wird durch die Ansteuerung seines Ausgangsmultiplexers 240 mit dem Wert logisch Eins aus der Ringtopologie ausgeschlossen. Es erfolgt eine lokale Rückkopplung der Zustandswerte innerhalb des Schieberegisters 200_2, so dass nach vier Zyklen wieder der Ausgangszustand hergestellt ist. Die Zustandsbits eines stromaufwärts liegenden Schieberegisters werden unter Umgehung des aus der Ringtopologie ausgeschlossenen Schieberegisters direkt in ein stromabwärts liegendes Schieberegister übertragen.

### Zufallsbit Z'=1 und Bit Gᵢ des geheimen Schlüssels = 0:

Da das betrachtete Schieberegister 200_2 ist Teil der Ringtopologie. Alle Flip Flops 204a, 204b, 204c, 204d derjenigen Schieberegister 200_2, für deren Geheimbit Gᵢ gilt Gᵢ = 0, sind in der Ringtopologie miteinander verschaltet und die entsprechenden Zustandswerte werden bei einem Zykluswechsel innerhalb der Ringtopologie weitergeschoben. Alle Zustandsbits eines Schieberegisters 200_2 werden sukzessive durch die Zustandsbits eines stromaufwärts (in Figur 10a weiter links) in der Ringtopologie liegenden Schieberegisters 200_2 ersetzt.

Werden in einer Schaltungsanordnung gemäß Figur 10a mehrere verschiedene Zufallswerte Z' jeweils für 4 Takte angelegt, so vertauschen und verschieben sich die Anfangszustände der Schieberegister 200_2 entsprechend den vorstehenden Ausführungen. Da die Vertauschungen von dem geheimen Schlüssel G mit seinen Geheimbits Gᵢ abhängen und diese Vertauschungen bei dem Zufallswert Z'=0 durch Verschiebungen ersetzt werden, wird bei einer genügenden Anzahl von Zufallsbits ein Anfangszustand für die erfindungsgemäße Signaturbildung erreicht, der einerseits zufällig ist (wegen Verwendung der Zufallsbitfolge Z') und auch nicht vorhersagbar für einen Angreifer, weil dieser auch bei Kenntnis der Zufallsbits Z' die aktuelle Permutation nicht berechnen kann, da ein erreichter Zustand auch von dem geheimen Schlüssel G abhängt. Gegenüber der Abspeicherung des gesamten Anfangszustandes in einem geheimen Speicher 102 nach Figur 5a hat der geheime Schlüssel G typischerweise eine geringere Bitbreite, was sich bei dem Abspeichern in einem geheimen Speicher als vorteilhaft erweist.

Die Stromaufnahme der vorstehend beschriebenen Verschiebeoperation ist konstant, weil sich die Anzahl der Bits in dem Schieberegister 200_2 nicht ändert. Die Multiplexer 220, 240 treiben immer die gleiche Last. Je nach den Werten an dem ausgewählten Eingang eines Multiplexers wechselt aber der Zustand seines Ausgangssignals. Für die Summe aller Eingangsmultiplexer 220 aus Figur 10a erscheinen in jedem Zyklus die gleichen Zustandsbits, nur jeweils an unterschiedlichen Positionen in der Ringtopologie. Für den Ausgangsmultiplexer 240 liegen nicht alle theoretisch möglichen Bitwerte an; es werden die Bits der Bypass-Zweige nicht über diesen Multiplexer 240 geführt. Es hängt davon ab, wie viele Bits Xᵢ = 1 sind und auch wie viele Einsen davon direkt nacheinander liegen (Kaskadierung). Hier kann es Unterschiede im Stromverbrauch und vor allem in Delay geben, wenn die Kaskadierung zu groß wird. Es kann deshalb sinnvoll sein, eine Kaskadierung durch eine geeignete Gestaltung der Geheimbits Gᵢ zu vermeiden. Ist zum Beispiel Gᵢ₋₁ = 1, so erzwingt man beispielsweise Gᵢ = 0. Diese Festlegung kann bereits bei der Wahl der Geheimbits Gᵢ berücksichtigt werden oder auch durch eine Schaltung, die unabhängig von der Wahl der Geheimbits Gᵢ ein Aufeinanderfolgen von zwei Bitwerten von Eins verhindert.

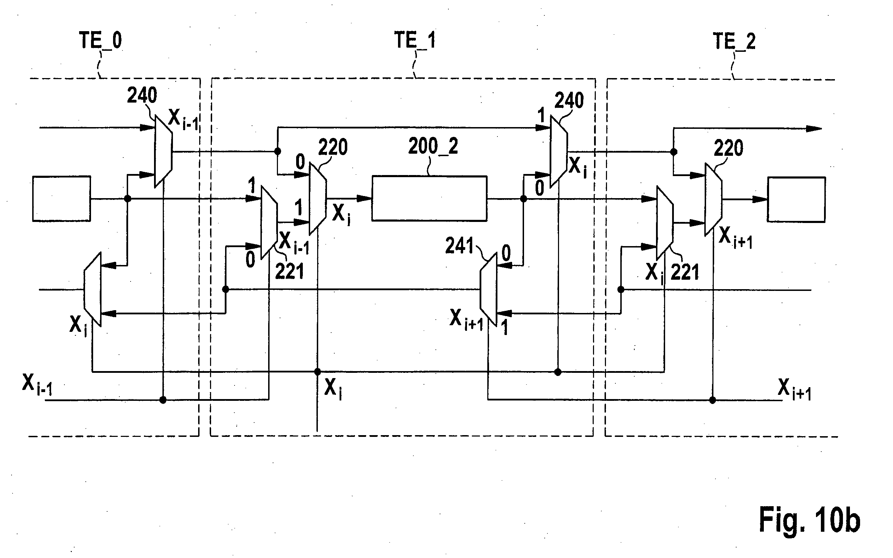

In Figur 10b ist eine Schaltungsanordnung mit einem erfindungsgemäßen Transformationselement TE_1 gezeigt, die eine Kaskadierung in beide Richtungen ermöglicht, wenn mehrere Bits Xᵢ nacheinander einen Wert von Eins aufweisen. Das wird durch die zusätzlichen Multiplexer 241, 221 erreicht. Diese Multiplexer des i-ten Transformationselements TE_1 schalten in Abhängigkeit von den Xi- Werten der Vorgänger- bzw. Nachfolgerelemente TE_0 bzw. TE_2. Die Multiplexer 221 werden durch Xᵢ₋₁ und die Multiplexer 241 durch Xᵢ₊₁ angesteuert. Diese Schaltungsanordnung bietet damit den Vorteil, dass die sonst nicht in die Kaskadierung einbezogenen Bits auf den Stromverbrauch einen entsprechenden Einfluss haben. Diese Bits werden zu einem separaten lokalen Ring verschaltet. Damit werden die Bypass-Operationen im Vorwärtszweig durch den Rückwärtszweig überlagert. Das Timing in beiden Zweigen ist äquivalent: im Vorwärtszweig durch die Multiplexer 240 und im Rückwärtszweig durch die Multiplexer 241. Ebenso ist das Timing in den Teilringen gleich: Im globalen Ring über die Multiplexer 240, 220, im Teilring über die Multiplexer 221, 220. Die Erzeugung der Permutation wird damit auch bei einer Kaskadierung sehr schwierig durch den Stromverbrauch beobachtbar. Weiterhin hat die Schaltungsanordnung gemäß Figur 10b eine stärkere Durchmischung der Anfangswerte für die Initialisierung der Zustandsautomaten zur Folge, weil auch eine Verschiebung von Zustandsinformationen in Figur 10b nach links erfolgen kann.

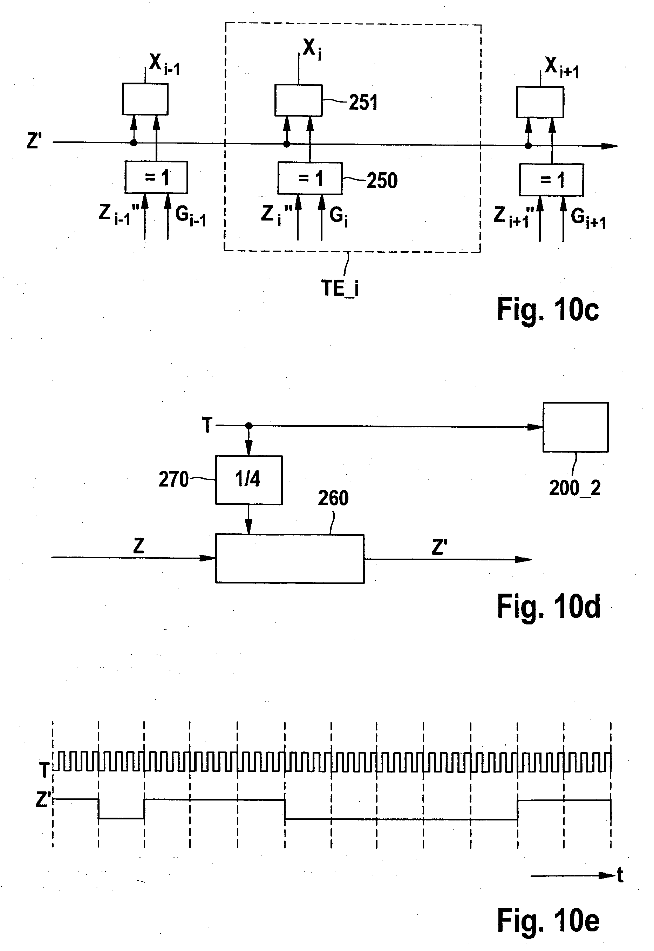

Wird nun in der Schaltung nach Figur 10b zur Generierung der Xᵢ - Werte, die das Umschalten der Schiebeketten regeln, ebenfalls eine Schaltung wie in Figur 10a benutzt, so zeigt sich, dass potenzielle Angriffe dadurch möglich sind, weil die Werte der benutzten Geheimbits Gᵢ konstant sind. In Figur 10c ist eine Schaltungsanordnung angegeben, die vorteilhaft variable Werte Xᵢ aus den Geheimbits Gᵢ erzeugt.

Dazu fließen weitere Zufallswerte Zᵢ" in die Generierung des Steuerbits Xᵢ zusammen mit den Geheimbits Gᵢ ein. Wie aus Figur 10c ersichtlich, wird ein Steuerbit Xᵢ, das beispielsweise dem i-ten Transformationselement TE_i der erfindungsgemäßen Signaturvorrichtung 100 zugeordnet ist, gebildet in Abhängigkeit des weiteren Zufallswerts Zᵢ", des Geheimbits Gᵢ und des Steuerbits Xᵢ, wobei vorliegend der weitere Zufallswert Zᵢ" und das Geheimbit Gᵢ dem XOR-Glied 250 zugeführt werden. Ein Ausgangssignal des XOR-Glieds 250 wird zusammen mit dem Zufallsbit Z' dem UND-Glied 251 zugeführt, an dessen Ausgang dementsprechend das Steuerbit Xᵢ erhalten wird.

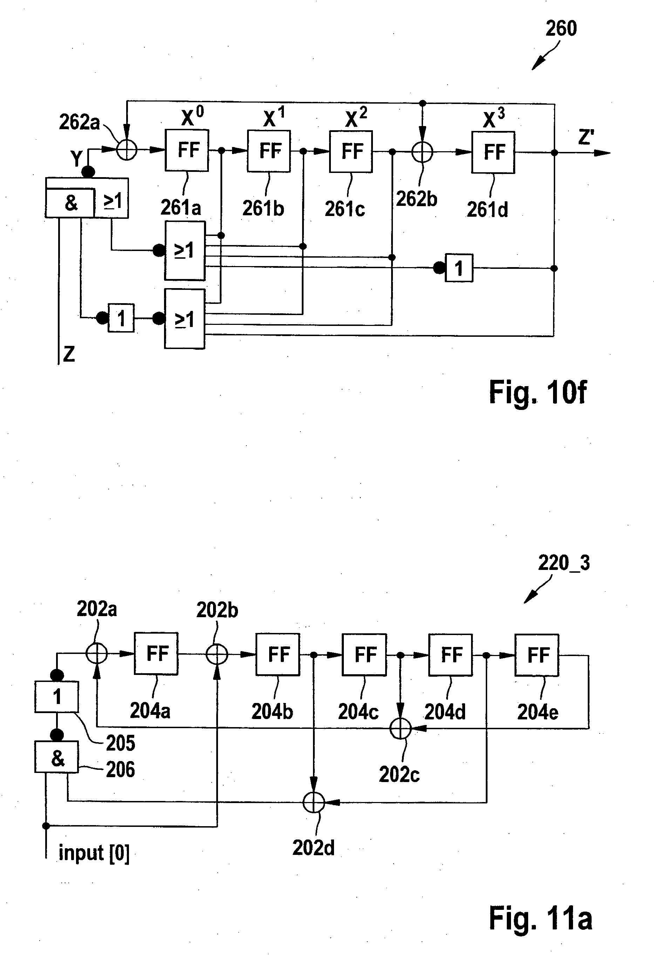

Um einem potenziellen Angreifer weniger Möglichkeiten für einen Angriff zu bieten, ist insbesondere bei bekanntem oder sogar extern vorgegebenem Zufallswert dafür Sorge zu tragen, dass dieser Zufallswert nicht direkt auf den Eingang Z' der Schaltung nach Figur 10a oder Figur 10c geschaltet wird. Günstig ist, wenn der Zufallswert Z zum Beispiel über ein modifiziertes linear feedback shift register, LFSR, eine Pseudo-Zufallsfolge mit vielen Signalwechseln für das Zufallsbit Z' generiert. Dazu wird der Zufallswert beispielsweise einem LFSR 260 nach Figur 10f zugeführt. Das LFSR 260 weist vier Flip Flops 261 a, 261 b, 261 c, 261 d auf, die über die Antivalenzglieder 262a, 262b miteinander verbunden sind.

Die Zustandswerte der einzelnen Flip Flops 261a, 261 b, 261c, 261d werden wie aus Figur 10f ersichtlich über diverse, nicht näher bezeichnete Logikglieder, zusammen mit dem Zufallswert Z auf das Antivalenzglied 262a rückgekoppelt. Am Ausgang des LFSR 260 wird schließlich der modifizierte Zufallswert Z' als höchstwertiges Zustandsbit des LFSR 260 erhalten. Die Ausgänge der anderen Flip Flops 261a, 261b, 261c können als modifizierte Zufallswerte Zᵢ" in der Schaltung nach Figur 10c benutzt werden. Unter Verwendung der durch das LFSR 260 intern in der Signaturvorrichtung 100 erzeugten Zufallswerte Z', Zᵢ" und in Verbindung mit einer hinreichend langen Permutationsphase für die Initialisierung der Zustandsautomaten ZA ist mit einer ausreichenden Vertauschung der Startwerte und somit einer verminderten Angriffsmöglichkeit bezüglich der erfindungsgemäßen Signaturbildung zu rechnen.

Figur 10d gibt eine erfindungsgemäße Vorrichtung zur Erzeugung von erfindungsgemäß modifizierten Zufallsbits Z' aus den herkömmlich erhaltenen Zufallsbits Z an. Die Zufallsbits Z können entweder intern in der Signaturvorrichtung 100 erzeugt werden oder von einer externen Quelle bereitgestellt werden. Das LFSR 260 wird vorliegend mit einer Taktfrequenz T/4 getaktet, die über den Teiler 270 aus einem Referenztakt T gewonnen wird. Der Referenztakt T wird direkt den erfindungsgemäßen Schieberegistern 200_2 (Figur 10a) zugeführt und definiert deren Verarbeitungszyklen.

Figur 10e zeigt beispielhaft einen zeitlichen Verlauf des Referenztakts T und der erfindungsgemäß erhaltenen Zufallsbits Z'.

Die unter Verwendung der erfindungsgemäß erhaltenen Zufallswerte Z', Zᵢ" ermittelten Xᵢ-Werte, vgl. Figur 10c, ermöglichen vorteilhaft eine variable Gestaltung der Einbeziehung oder der Überspringung einzelner Schieberegister 200_2 (Figur 10a) für die gesamte Ringtopologie. Damit wird eine bessere Durchmischung von Zustandswerten unter den verschiedenen Schieberegistern 200_2 bzw. Zustandsautomaten erreicht, aber auch die Beobachtbarkeit durch einen Angreifer erschwert.

In einer weiteren Ausgestaltung der Erfindung kann man auch in der Schaltung gemäß Figur 10c eine maximale Anzahl der bei der Verschiebung von Zustandswerten übersprungenen Startwerte begrenzen. Dazu werden die Steuerbit-Werte Xᵢ von den Werten Xᵢ₋₁, Xᵢ₋₂ vorangehender Stufen i-1, i-2 abhängig gemacht. Beispielsweise kann schaltungstechnisch nur dann der Wert Xᵢ = 1 zugelassen werden, wenn mindestens eine von beiden Gleichungen gilt: Xᵢ₋₁ = 0 oder Xᵢ₋₂ = 0. Damit wird die Kaskadierung beispielsweise auf zwei Stufen begrenzt.

Die vorstehende Initialisierungsprozedur kann auf alle Zustandsautomaten ZA beider Gruppen G_0, G_1 (Figur 2) von Transformationselementen angewandt werden. Für die Zustandsautomaten bzw. Schieberegister der zweiten Gruppe G_1 können zusätzliche Geheimbits (Gᵢ-Werte) vorgesehen werden. Alternativ können auch die für die Zustandsautomaten der ersten Gruppe G_0 verwendeten Geheimbits Gᵢ oder daraus abgeleitete Werte benutzt werden. Es ist ferner möglich, invertierte Geheimbits zu benutzen, um auch bezüglich der Initialisierung eine weitere Kompensation zwischen den Gruppen G_0, G_1 zu erreichen. Es besteht weiter die Möglichkeit, einen erzeugten oder geladenen ursprünglichen Startzustand der Zustandsautomaten der ersten Gruppe G_0 in die Zustandsautomaten der zweiten Gruppe G_1 zu laden und dann ggf. noch weiter zu manipulieren, beispielsweise durch das Anlegen einer zufälligen Eingangsfolge input_rnd, vgl. Figur 5b.
Die in den Figuren 10a, 10b, 10c abgebildeten Komponenten sollten bei einer schaltungstechnischen Realisierung möglichst als Wiederholstruktur in einem Layout der Signaturvorrichtung 100 realisiert werden, um eine unbefugte Analyse der erfindungsgemäßen Signaturvorrichtung 100 bzw. der elektromagnetischen Abstrahlungen einzelner Komponenten zu erschweren.

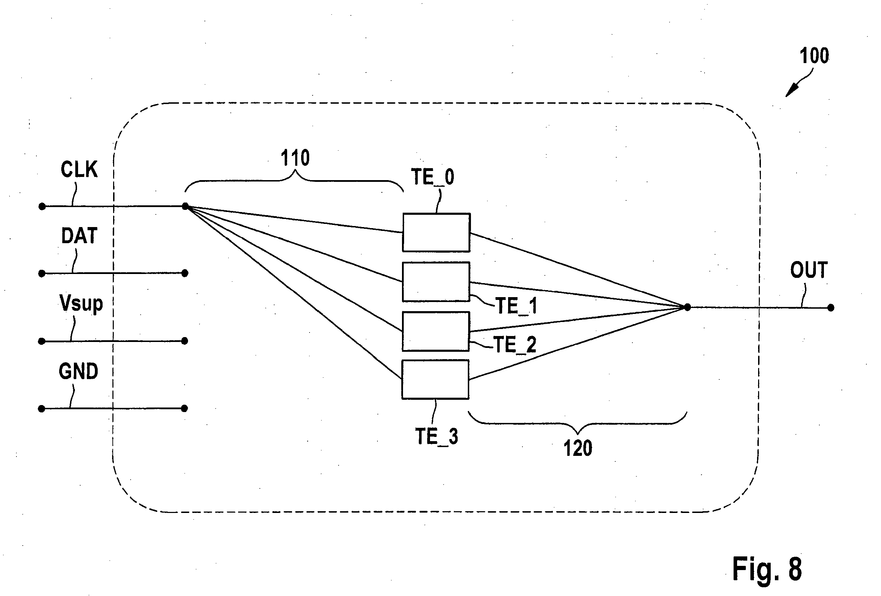

Figur 8 zeigt schematisch eine Realisierung der erfindungsgemäßen Signaturvorrichtung 100 in Form einer Schaltungsanordnung, die mehrere elektronische Bauelemente aufweist. Die Schaltungsanordnung 100 weist als Eingangsanschlüsse einen Takteingang CLK auf und einen Dateneingang DAT, über den beispielsweise das Eingangssignal input (Figur 1) bereitgestellt werden kann. Ferner verfügt die Schaltungsanordnung 100 über einen Versorgungsspannungsanschluss Vsup und einen weiteren Bezugspotentialanschluss GND, bei dem es sich beispielsweise um einen Masseanschluss handeln kann.

Der Übersichtlichkeit halber sind in Figur 8 nur solche Leitungsabschnitte 110 der Taktleitungen CLK abgebildet, die die beispielhaft abgebildeten vier Transformationselemente TE_0, .., TE_3 mit dem Taktsignal versorgen. Ebenfalls sind solche Leitungsabschnitte 120 von Datenleitungen abgebildet, die die Transformationselemente TE_0, .., TE_3 mit einem Ausgangsanschluss OUT der Schaltungsanordnung 100 verbinden.

Erfindungsgemäß sind die Leitungsabschnitte 110, 120 der Taktleitungen CLK und der Datenleitungen OUT hinsichtlich Länge, Transmissionseigenschaften, Kapazität usw. so aufeinander abgestimmt, dass von einem gemeinsamen Anschluss CLK beziehungsweise zu einem gemeinsamen Anschluss OUT über die Leitungsabschnitte 110, 120 übertragene Signale zeitgleich bei den jeweiligen Komponenten TE_0, TE_1, .. eintreffen. Durch die sich hieraus ergebende Symmetrie und Synchronität bezüglich der Signalverarbeitung der Transformationselemente TE_0, .., TE_3 werden DPA-Attacken weiter erschwert.

Figur 11a zeigt eine weitere Ausführungsform eines erfindungsgemäßen nichtlinear rückgekoppelten Schieberegisters 220_3, das insgesamt über 5 Speicherelemente 204a, 204b, 204c, 204d, 204e verfügt, die wie aus Figur 11a ersichtlich über Antivalenzglieder 202a, 202b, 202c, 202d miteinander verknüpft sind. Eine nichtlineare Rückkopplung wird bei der in Figur 11a abgebildeten Topologie durch die die Funktionsblöcke 205, 206 enthaltenden Rückkopplungszweige realisiert. Dem Funktionsblock 206 wird zusätzlich das Eingangssignal input[0] zugeführt.

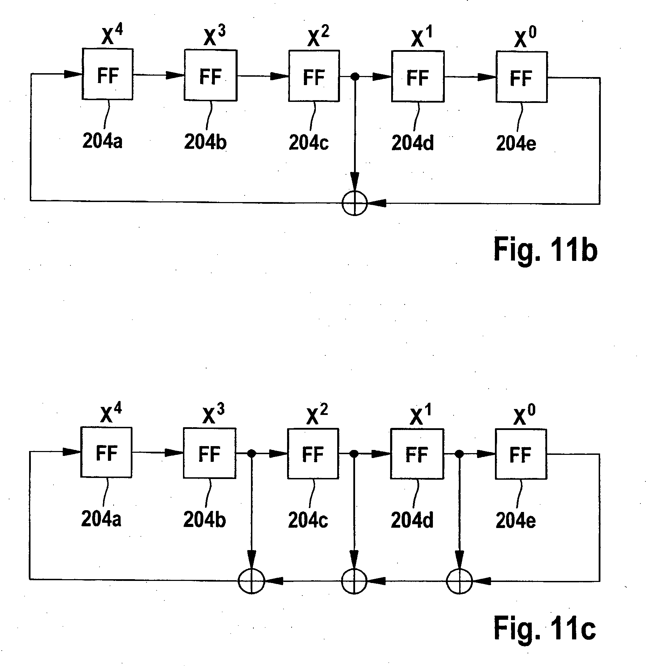

Die vorstehend unter Bezugnahme auf Figur 11a beschriebene Topologie des nichtlinear rückgekoppelten Schieberegisters 220_3 realisiert in Abhängigkeit des Eingangssignals input[0] die beiden unterschiedlichen primitiven Polynome x⁵ + x² + 1 und x⁵ + x³ + x² + x + 1, vergleiche Figur 11b, 11c, die eine sich jeweils in Abhängigkeit des Eingangssignals input[0] ergebende Grundstruktur des Schieberegisters 220_3 aus Figur 11 a veranschaulichen.

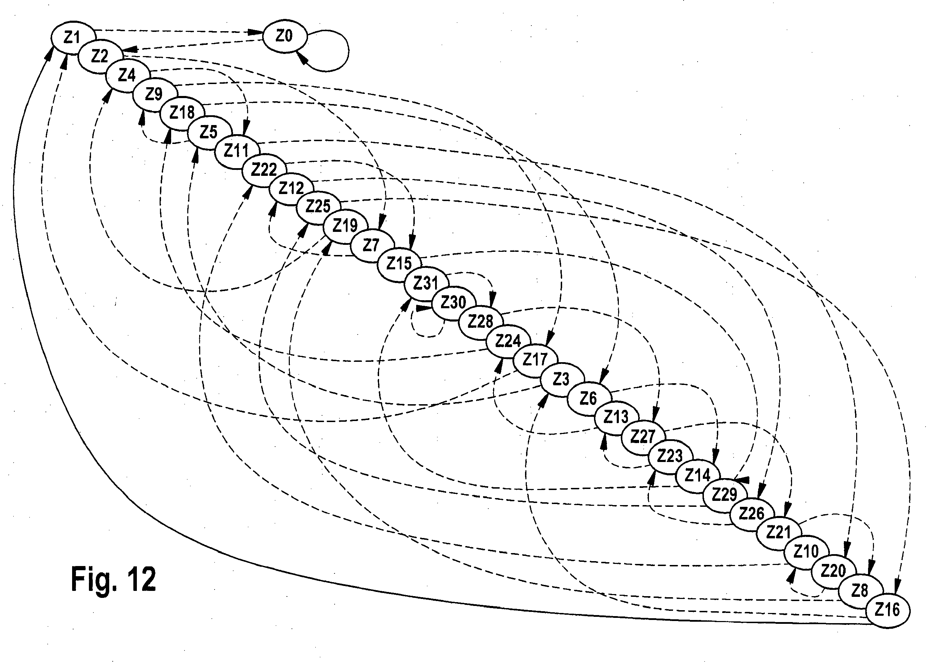

Figur 12 zeigt einen Zustandsübergangsgraphen, der alle möglichen Zustände Z0, .., Z31 des durch das nichtlinear rückgekoppelte Schieberegister 220_3 gemäß Figur 11a realisierten Zustandsautomaten veranschaulicht. Für die Zustandsübergänge gelten die bereits unter Bezugnahme auf den Zustandsübergangsgraphen gemäß Figur 9 erläuterten Zusammenhänge.

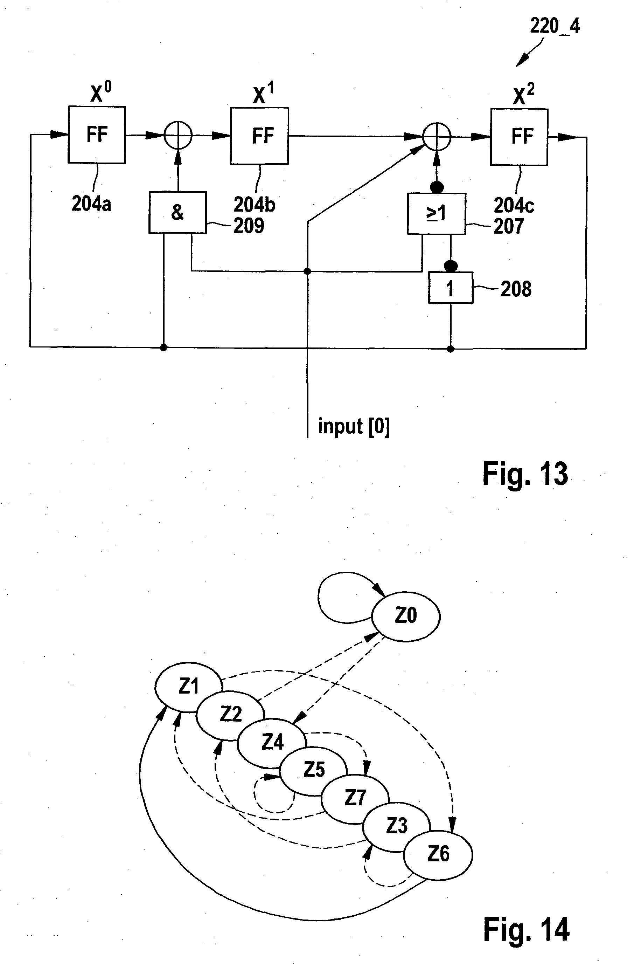

Figur 13 zeigt beispielhaft ein nichtlinear rückgekoppeltes Schieberegister 220_4 mit drei Speicherelementen 204a, 204b, 204c, die durch nicht näher bezeichnete Antivalenzglieder miteinander verknüpft sind. Eine nichtlineare Rückkopplung wird durch die weiteren Funktionsblöcke 207, 208, 209 in Abhängigkeit des Eingangssignals input[0] bewirkt.

Das in Figur 13 abgebildete nichtlinear rückgekoppelte Schieberegister 220_4 realisiert die primitiven Polynome x³ + x +1 und x³ + x² + 1, wiederum in Abhängigkeit eines Zustands des Eingangssignals input[0].

Figur 14 zeigt einen Zustandsübergangsgraphen der möglichen Zustände des nichtlinear rückgekoppelten Schieberegisters 220_4 aus Figur 13.

Da ein Schieberegister vom NLMISR-Typ Kollisionen besitzt, d.h. die Eigenschaft, dass es von einem bestimmten Anfangszustand aus verschiedene Eingangsdatenfolgen geben kann, die beide in den gleichen Endzustand des NLMISR münden, kann erfindungsgemäß vorteilhaft vorgesehen sein, die nach dem NLMISR-Prinzip arbeitenden erfindungsgemäßen Zustandsautomaten ZA, ZA' so auszubilden, dass sie kollisionsfrei arbeiten. Hierfür muss gewährleistet werden, dass das Eingangssignal input (Figur 1) nicht für eine vorgebbare maximale Anzahl von Verarbeitungszyklen nacheinander konstant bleibt. Dies kann vorteilhaft beispielsweise dadurch erreicht werden, dass dem Eingangssignal input mindestens ein Paritätsbit hinzufügt wird, wobei das Paritätsbit ebenso wie das Eingangssignal selbst den Transformationselementen TE_0, .. zur Verarbeitung zugeführt wird. Durch die Hinzufügung der Paritätsbits an geeigneter Stelle des Eingangssignals ist vorteilhaft sichergestellt, dass das Eingangssignal nicht länger als die maximale Anzahl von Verarbeitungszyklen konstant bleibt.

Alternativ oder ergänzend kann das Eingangssignal input auch durch Stopfbits ergänzt werden, die denselben Effekt haben.

Geeignete Vorrichtungen zur Modifikation des Eingangssignals input nach den vorstehend genannten Kriterien können in den individuellen erfindungsgemäßen Transformationselementen TE_0, .. vorgesehen sein.

## Patentansprüche

1. Vorrichtung (100) zur Bildung einer Signatur (S) aus einem Eingangssignal (input), **dadurch gekennzeichnet, dass** mehrere jeweils einen Zustandsautomaten (ZA) aufweisende Transformationselemente (TE_0, TE_1, ..) vorgesehen sind, denen eingangsseitig jeweils das Eingangssignal (input) und/oder ein von dem Eingangssignal abhängiges Signal (input') zuführbar ist, dass alle Zustandsautomaten (ZA) gleichartig sind und so ausgebildet, insbesondere initialisierbar, sind, dass jeder Zustandsautomat (ZA) stets jeweils einen anderen Zustand aufweist als alle anderen Zustandsautomaten (ZA), und dass die Signatur (S) in Abhängigkeit von Zustandsinformationen mindestens eines Zustandsautomaten (ZA) bildbar ist.

2. Vorrichtung (100) nach Anspruch 1, **dadurch gekennzeichnet, dass** die Anzahl der Transformationselemente (TE_0, TE_1, ..) der Zahl der maximal möglichen verschiedenen Zustände des Zustandsautomaten entspricht.

3. Vorrichtung (100) nach einem der vorstehenden Ansprüche, **dadurch gekennzeichnet, dass** das Eingangssignal (input) den Transformationselementen (TE_0,TE_1, ..; TE_16, TE_17, ..) parallel in Form von Datenworten vorgebbarer Länge zuführbar ist.

4. Vorrichtung (100) nach einem der vorstehenden Ansprüche, **dadurch gekennzeichnet, dass** die Signatur (S) als Verkettung von die Zustandsinformationen der Zustandsautomaten mehrerer Transformationselemente (TE_0,TE_1, ..; TE_16, TE_17, ..) repräsentierender Datenworte bildbar ist.

5. Vorrichtung (100) nach einem der vorstehenden Ansprüche, **dadurch gekennzeichnet, dass** die Zustandsautomaten so ausgebildet sind, dass ein Übergang von einem Ausgangszustand (Z8) in einen Folgezustand (Z9) in Abhängigkeit von dem Eingangssignal (input, input') so erfolgt, dass für ein beliebiges vorgebbares Eingangssignal (input, input') jeweils ein eindeutiger Folgezustand (Z9) angenommen wird, wobei insbesondere nicht zwei verschiedene Ausgangszustände existieren, die bei demselben Eingangssignal (input, input') auf denselben Folgezustand (Z9) führen.

6. Vorrichtung (100) nach einem der vorstehenden Ansprüche, **dadurch gekennzeichnet, dass** mehrere Gruppen (G_0, G_1) von Transformationselementen (TE_0, TE_1, ..; TE_16, TE_17, ..) vorgesehen sind, wobei allen Transformationselementen (TE_0, TE_1, ..; TE_16, TE_17, ..) derselben Gruppe (G_0, G_1) jeweils dasselbe Eingangssignal (input) und/oder dasselbe von dem Eingangssignal abhängige Signal (input') zuführbar ist.

7. Vorrichtung (100) nach Anspruch 6, **dadurch gekennzeichnet, dass** Transformationselementen (TE_0, TE_1, ..) einer ersten Gruppe (G_0) das Eingangssignal (input) und Transformationselementen (TE_16, TE_17, ..) einer zweiten Gruppe (G_1) ein invertiertes Eingangssignal (input') zuführbar ist.

8. Vorrichtung (100) nach einem der Ansprüche 6 bis 7, **dadurch gekennzeichnet, dass** die Zustandsautomaten (ZA, ZA') von Transformationselementen (TE_0, TE_1, ..; TE_16, TE_17, ..), die verschiedenen Gruppen (G_0, G_1) angehören, nicht gleichartig zueinander sind.

9. Vorrichtung (100) nach einem der vorstehenden Ansprüche, **dadurch gekennzeichnet, dass** mindestens ein, vorzugsweise jedoch alle, Zustandsautomaten (ZA) jeweils mit einem vorgebbaren Startzustand (init) initialisierbar sind.

10. Vorrichtung (100) nach Anspruch 9, **dadurch gekennzeichnet, dass** der Startzustand (init) in einem geheimen Speicher (102) speicherbar und für die Initialisierung in den oder die Zustandsautomaten (ZA) übertragbar ist.

11. Vorrichtung (100) nach Anspruch 10, **dadurch gekennzeichnet, dass** die Zustandsautomaten (ZA) nach der Initialisierung mit dem Startzustand (init) mit einem zufallsbasierten Eingangssignal (input_rnd) beaufschlagbar sind.

12. Vorrichtung (100) nach einem der Ansprüche 9 bis 11, **dadurch gekennzeichnet, dass** alle Zustandsautomaten (ZA, ZA') jeweils mit einem vorgebbaren Startzustand (init) initialisierbar sind, wobei jeder Zustandsautomat mit einem anderen individuellen Startzustand initialisierbar ist.

13. Vorrichtung (100) nach Anspruch 12, **dadurch gekennzeichnet, dass** die individuellen Startzustände der Zustandsautomaten (ZA; ZA') untereinander permutierbar sind, insbesondere zufallsabhängig und/oder in Abhängigkeit von einem geheimen Schlüssel.

14. Vorrichtung (100) nach einem der vorstehenden Ansprüche, **dadurch gekennzeichnet, dass** die Vorrichtung (100) zumindest teilweise in Form einer Schaltungsanordnung mit, vorzugsweise monolithisch integrierten, elektronischen und/oder optischen Bauelementen realisiert ist.

15. Vorrichtung (100) nach Anspruch 14, **dadurch gekennzeichnet, dass** solche Gruppen von Bauelementen und/oder sie kontaktierende Datenleitungen, die die Transformationselemente (TE_0, TE_1, ..) oder deren Zustandsautomaten (ZA) realisieren, gleichartig ausgebildet sind, insbesondere in Form von Wiederholstrukturen in einem mit der Schaltungsanordnung korrespondierenden Layout.

16. Vorrichtung nach einem der Ansprüche 14 bis 15, **dadurch gekennzeichnet, dass** Leitungsabschnitte von Taktleitungen und/oder Datenleitungen und/oder Stromversorgungsleitungen, die mit den die mehreren Transformationselemente (TE_0, TE_1, ..) oder deren Zustandsautomaten (ZA) realisierenden Gruppen von Bauelementen verbunden sind, so aufeinander abgestimmt sind, dass von einem gemeinsamen Anschluss (CLK, OUT) über die Leitungsabschnitte übertragene Signale zeitgleich bei den jeweiligen Gruppen eintreffen.

17. Vorrichtung (100) nach einem der vorstehenden Ansprüche, **dadurch gekennzeichnet, dass** mindestens ein Zustandsautomat (ZA, ZA'), vorzugsweise jedoch alle Zustandsautomaten (ZA, ZA'), mittels eines nichtlinear rückgekoppelten Schieberegisters (200, 200_1, 200_2, 200_3, 200_4), vorzugsweise mit mehreren Eingängen, NLMISR, realisiert ist.

18. Vorrichtung (100) nach Anspruch 17, **dadurch gekennzeichnet, dass** das NLMISR (200) eine Mehrzahl von in Reihe geschalteten, vorzugsweise als Flip-Flop ausgebildeten, Speicherelementen (204a, 204b, 204c, 204d) aufweist, und eine Umschalteinheit (210, 210'), die dazu ausgebildet ist, mindestens einen Rückkoplungszweig des NLMISR (200) in Abhängigkeit des Eingangssignals (input[0], input[1], input[2], input[3]) so zu modifizieren, dass durch das NLMISR (200) ein dem Zustand des Eingangssignals (input[0], input[1], input[2], input[3]) zugeordnetes Polynom realisierbar ist.

19. Vorrichtung (100) nach einem der Ansprüche 17 bis 18, **dadurch gekennzeichnet, dass** das NLMISR (200) dazu ausgebildet ist, ein 4 Bit breites Eingangssignal (input_0) zu verarbeiten und wahlweise die primitiven Polynome x⁴+x³+1 und x⁴+x+1 zu realisieren.

20. Vorrichtung (100) nach einem der Ansprüche 17 bis 19, **dadurch gekennzeichnet, dass** das NLMISR (200) dazu ausgebildet ist, ein 3 Bit breites Eingangssignal (input_1) zu verarbeiten und wahlweise die primitiven Polynome x³+x+1 und x³+x²+1 zu realisieren.

21. Verfahren zur Bildung einer Signatur (S) aus einem Eingangssignal (input), **dadurch gekennzeichnet, dass** mehreren jeweils einen Zustandsautomaten (ZA) aufweisenden Transformationselementen (TE_0, TE_1, ..) eingangsseitig jeweils das Eingangssignal (input) und/oder ein von dem Eingangssignal abhängiges Signal (input') zugeführt wird, dass alle Zustandsautomaten (ZA) gleichartig sind und vorzugsweise so initialisiert werden, dass jeder Zustandsautomat (ZA) stets jeweils einen anderen Zustand aufweist als alle anderen Zustandsautomaten (ZA), und dass die Signatur (S) in Abhängigkeit von Zustandsinformationen mindestens eines Zustandsautomaten (ZA) gebildet wird.

22. Verfahren nach Anspruch 21, **dadurch gekennzeichnet, dass** so viele Transformationselemente (TE_0, TE_1, .., TE_15) verwendet werden, wie es maximal mögliche verschiedene Zustände (Z0, Z1, .., Z15) des Zustandsautomaten (ZA) gibt.

23. Verfahren nach einem der Ansprüche 21 bis 22, **dadurch gekennzeichnet, dass** das Eingangssignal (input) den Transformationselementen (TE_0, TE_1, ..; TE_16, TE_17, ..) parallel in Form von Datenworten vorgebbarer Länge zugeführt wird und/oder dass die Signatur (S) als Verkettung von die Zustandsinformationen der Zustandsautomaten (ZA) mehrerer Transformationselemente (TE_0, TE_1, ..; TE_16, TE_17, ..) repräsentierender Datenworte gebildet wird.

24. Verfahren nach einem der Ansprüche 21 bis 23, **dadurch gekennzeichnet, dass** jeder Zustandsautomat (ZA) in Abhängigkeit von dem Eingangssignal (input, input') so von einem Ausgangszustand (Z8) in einen Folgezustand (Z9) übergeht, dass für ein beliebiges vorgebbares Eingangssignal (input, input') jeweils ein eindeutiger Folgezustand (Z9) angenommen wird, wobei insbesondere nicht zwei verschiedene Ausgangszustände existieren, die bei demselben Eingangssignal (input, input') auf denselben Folgezustand (Z9) führen.

25. Verfahren nach einem der Ansprüche 21 bis 24, **dadurch gekennzeichnet, dass** mehrere Gruppen (G_0, G_1) von Transformationselementen (TE_0, TE_1, ..; TE_16, TE_17, ..) vorgesehen sind, wobei allen Transformationselementen (TE_0, TE_1, ..; TE_16, TE_17, ..) derselben Gruppe (G_0, G_1) jeweils dasselbe Eingangssignal (input) und/oder dasselbe von dem Eingangssignal abhängige Signal (input') zugeführt wird, wobei insbesondere Transformationselementen (TE_0, TE_1, ..) einer ersten Gruppe (G_0) das Eingangssignal (input) und Transformationselementen (TE_16, TE_17, ..) einer zweiten Gruppe (G_1) ein invertiertes Eingangssignal (input') zugeführt wird.

26. Verfahren nach einem der Ansprüche 21 bis 25, **dadurch gekennzeichnet, dass** mindestens ein, vorzugsweise jedoch alle, Zustandsautomaten (ZA) jeweils mit einem vorgebbaren Startzustand (init) initialisiert werden, wobei insbesondere jeder Zustandsautomat (ZA) innerhalb einer Gruppe (G_0, G_1) mit einem anderen individuellen Startzustand initialisiert wird.

27. Verfahren nach Anspruch 26, **dadurch gekennzeichnet, dass** der Startzustand (init) in einem geheimen Speicher (102) gespeichert und für die Initialisierung in den oder die Zustandsautomaten (ZA) übertragen wird.

28. Verfahren nach einem der Ansprüche 26 bis 27, **dadurch gekennzeichnet, dass** die Zustandsautomaten (ZA) nach der Initialisierung mit dem Startzustand (init) mit einem zufallsbasierten Eingangssignal (input_rnd) beaufschlagt werden.

29. Verfahren nach einem der Ansprüche 26 bis 28, **dadurch gekennzeichnet, dass** die individuellen Startzustände der Zustandsautomaten (ZA) untereinander permutiert werden, insbesondere zufallsabhängig und/oder in Abhängigkeit von einem geheimen Schlüssel.

## Claims

1. Apparatus (100) for forming a signature (S) from an input signal (input), **characterized in that** a plurality of transformation elements (TE_0, TE_1, ..) each having a state machine (ZA) are provided and can each be supplied, on the input side, with the input signal (input) and/or a signal (input') dependent on the input signal, **in that** all state machines (ZA) are identical and are designed, in particular can be initialized, in such a manner that each state machine (ZA) always respectively has a different state than all other state machines (ZA), and **in that** the signature (S) can be formed on the basis of state information relating to at least one state machine (ZA).

2. Apparatus (100) according to Claim 1, **characterized in that** the number of transformation elements (TE_0, TE_1, ..) corresponds to the number of maximum possible different states of the state machine.

3. Apparatus (100) according to one of the preceding claims, **characterized in that** the input signal (input) can be supplied to the transformation elements (TE_0, TE_1, ..; TE_16, TE_17, ..) in a parallel manner in the form of data words of a predefinable length.

4. Apparatus (100) according to one of the preceding claims, **characterized in that** the signature (S) can be formed as a concatenation of data words representing the state information relating to the state machines of a plurality of transformation elements (TE_0, TE_1, ..; TE_16, TE_17, ..).

5. Apparatus (100) according to one of the preceding claims, **characterized in that** the state machines are formed in such a manner that a transition from an initial state (Z8) to a following state (Z9) is carried out on the basis of the input signal (input, input') in such a manner that a unique following state (Z9) is respectively assumed for any desired predefinable input signal (input, input'), in which case, in particular, two different initial states which result in the same following state (Z9) given the same input signal (input, input') do not exist.

6. Apparatus (100) according to one of the preceding claims, **characterized in that** a plurality of groups (G_0, G_1) of transformation elements (TE_0, TE_1, ..; TE_16, TE_17, ..) are provided, the same input signal (input) and/or the same signal (input') dependent on the input signal being able to be respectively supplied to all transformation elements (TE_0, TE_1, ..; TE_16, TE_17, ..) in the same group (G_0, G_1).

7. Apparatus (100) according to Claim 6, **characterized in that** the input signal (input) can be supplied to transformation elements (TE_0, TE_1, ..) in a first group (G_0) and an inverted input signal (input') can be supplied to transformation elements (TE_16, TE_17, ..) in a second group (G_1).

8. Apparatus (100) according to either of Claims 6 and 7, **characterized in that** the state machines (ZA, ZA') of transformation elements (TE_0, TE_1, ..; TE_16, TE_17, ..) which belong to different groups (G_0, G_1) are not identical to one another.

9. Apparatus (100) according to one of the preceding claims, **characterized in that** at least one state machine (ZA), but preferably all state machines (ZA), can each be initialized with a predefinable starting state (init).

10. Apparatus (100) according to Claim 9, **characterized in that** the starting state (init) can be stored in a secret memory (102) and can be transmitted to the state machine(s) (ZA) for the initialization.

11. Apparatus (100) according to Claim 10, **characterized in that** a random-based input signal (input_rnd) can be applied to the state machines (ZA) following initialization with the starting state (init).

12. Apparatus (100) according to one of Claims 9 to 11, **characterized in that** all state machines (ZA, ZA') can each be initialized with a predefinable starting state (init), each state machine being able to be initialized with a different individual starting state.

13. Apparatus (100) according to Claim 12, **characterized in that** the individual starting states of the state machines (ZA; ZA') are permutable with one another, in particular in a random-based manner and/or on the basis of a secret key.

14. Apparatus (100) according to one of the preceding claims, **characterized in that** the apparatus (100) is implemented at least partially in the form of a circuit arrangement having electronic and/or optical components which are preferably monolithically integrated.

15. Apparatus (100) according to Claim 14, **characterized in that** such groups of components and/or data lines making contact therewith, which implement the transformation elements (TE_0, TE_1, ..) or their state machines (ZA), are identical, in particular in the form of repetition structures in a layout corresponding to the circuit arrangement.

16. Apparatus according to either of Claims 14 and 15, **characterized in that** line sections of clock lines and/or data lines and/or power supply lines which are connected to the groups of components implementing the plurality of transformation elements (TE_0, TE_1, ..) or their state machines (ZA) are matched to one another in such a manner that signals transmitted from a common connection (CLK, OUT) via the line sections arrive at the respective groups at the same time.

17. Apparatus (100) according to one of the preceding claims, **characterized in that** at least one state machine (ZA, ZA'), but preferably all state machines (ZA, ZA'), is/are implemented using a non-linear feedback shift register (200, 200_1, 200_2, 200_3, 200_4), preferably having a plurality of inputs, NLMISR.

18. Apparatus (100) according to Claim 17, **characterized in that** the NLMISR (200) has a plurality of memory elements (204a, 204b, 204c, 204d), which are connected in series and are preferably in the form of flip-flops, and a changeover unit (210, 210') which is designed to modify at least one feedback branch of the NLMISR (200) on the basis of the input signal (input[0], input[1], input[2], input[3]) in such a manner that a polynomial associated with the state of the input signal (input[0], input[1], input[2], input[3]) can be realized by the NLMISR (200).

19. Apparatus (100) according to either of Claims 17 and 18, **characterized in that** the NLMISR (200) is designed to process a 4-bit input signal (input_0) and to optionally realize the primitive polynomials x⁴+x³+1 and x⁴+x+1.

20. Apparatus (100) according to one of Claims 17 to 19, **characterized in that** the NLMISR (200) is designed to process a 3-bit input signal (input_1) and to optionally realize the primitive polynomials x³+x+1 and x³+x²+1.

21. Method for forming a signature (S) from an input signal (input), **characterized in that** a plurality of transformation elements (TE_0, TE_1, ..) each having a state machine (ZA) can each be supplied, on the input side, with the input signal (input) and/or a signal (input') dependent on the input signal, **in that** all state machines (ZA) are identical and are preferably initialized in such a manner that each state machine (ZA) always respectively has a different state than all other state machines (ZA), and **in that** the signature (S) is formed on the basis of state information relating to at least one state machine (ZA).

22. Method according to Claim 21, **characterized in that** as many transformation elements (TE_0, TE_1, .., TE_15) as there are maximum possible different states (Z0, Z1, .., Z15) of the state machine (ZA) are used.

23. Method according to either of Claims 21 and 22, **characterized in that** the input signal (input) is supplied to the transformation elements (TE_0, TE_1, ..; TE_16, TE_17, ..) in a parallel manner in the form of data words of a predefinable length, and/or **in that** the signature (S) is formed as a concatenation of data words representing the state information relating to the state machines (ZA) of a plurality of transformation elements (TE_0, TE_1, ..; TE_16, TE_17, ..).

24. Method according to one of Claims 21 to 23, **characterized in that** each state machine (ZA) changes from an initial state (Z8) to a following state (Z9) on the basis of the input signal (input, input') in such a manner that a unique following state (Z9) is respectively assumed for any desired predefinable input signal (input, input'), in which case, in particular, two different initial states which result in the same following state (Z9) given the same input signal (input, input') do not exist.

25. Method according to one of Claims 21 to 24, **characterized in that** a plurality of groups (G_0, G_1) of transformation elements (TE_0, TE_1, ..; TE_16, TE_17, ..) are provided, the same input signal (input) and/or the same signal (input') dependent on the input signal respectively being supplied to all transformation elements (TE_0, TE_1, ..; TE_16, TE_17, ..) in the same group (G_0, G_1), the input signal (input) being supplied, in particular, to transformation elements (TE_0, TE_1, ..) in a first group (G_0) and an inverted input signal (input') being supplied to transformation elements (TE_16, TE_17, ..) in a second group (G_1).

26. Method according to one of Claims 21 to 25, **characterized in that** at least one state machine (ZA), but preferably all state machines (ZA), is/are each initialized with a predefinable starting state (init), each state machine (ZA) inside a group (G_0, G_1) being initialized with a different individual starting state, in particular.

27. Method according to Claim 26, **characterized in that** the starting state (init) is stored in a secret memory (102) and is transmitted to the state machine(s) (ZA) for the initialization.

28. Method according to either of Claims 26 and 27, **characterized in that** a random-based input signal (input_rnd) is applied to the state machines (ZA) following initialization with the starting state (init).

29. Method according to one of Claims 26 to 28, **characterized in that** the individual starting states of the state machines (ZA) are permuted with one another, in particular in a random-based manner and/or on the basis of a secret key.

## Revendications

1. Dispositif (100) pour former une signature (S) à partir d'un signal d'entrée (input), **caractérisé en ce que** sont prévus plusieurs éléments de transformation (TE_0,TE_1, ...) présentant à chaque fois un automate d'état (ZA), à l'entrée desquels peut à chaque fois être acheminé le signal d'entrée (input) et/ou un signal dépendant du signal d'entrée (input'), **en ce que** tous les automates d'état (ZA) sont du même type et sont configurés, notamment initialisables, de telle sorte que chaque automate d'état (ZA) présente toujours à chaque fois un autre état que tous les autres automates d'état (ZA), et **en ce que** la signature (S) peut être formée en fonction des informations d'état d'au moins un automate d'état (ZA).

2. Dispositif (100) selon la revendication 1, **caractérisé en ce que** le nombre d'éléments de transformation (TE_0, TE_1, ...) correspond au nombre maximum d'états différents possibles de l'automate d'état.

3. Dispositif (100) selon l'une des revendications précédentes, **caractérisé en ce que** le signal d'entrée (input) peut être acheminé aux éléments de transformation (TE_0, TE_1, ... ; TE_16, TE_17, ...) en parallèle sous la forme de mots de données dont la longueur peut être prédéfinie.

4. Dispositif (100) selon l'une des revendications précédentes, **caractérisé en ce que** la signature (S) peut être formée sous la forme d'un enchaînement de mots de données représentant les informations d'état des automates d'état de plusieurs éléments de transformation (TE_0, TE_1, ... ; TE_16, TE_17, ...).

5. Dispositif (100) selon l'une des revendications précédentes, **caractérisé en ce que** les automates d'état sont configurés de telle sorte qu'une transition d'un état initial (Z8) en un état suivant (Z9) en fonction du signal d'entrée (input, input') s'effectue de telle sorte que pour un signal d'entrée (input, input') quelconque pouvant être prédéfini, un état suivant (Z9) explicite est à chaque fois adopté, l'existence de deux états initiaux différents qui, avec le même signal d'entrée (input, input'), mènent au même état suivant (Z9), étant notamment impossible.

6. Dispositif (100) selon l'une des revendications précédentes, **caractérisé en ce que** plusieurs groupes (G_0, G_1) d'éléments de transformation (TE_0, TE_1, ... ; TE_16, TE_17, ...) sont prévus, le même signal d'entrée (input) et/ou le même signal dépendant du signal d'entrée (input') pouvant à chaque fois être acheminé à tous les éléments de transformation (TE_0, TE_1, ... ; TE_16, TE_17, ...) du même groupe (G_0, G_1).

7. Dispositif (100) selon la revendication 6, **caractérisé en ce que** le signal d'entrée (input) peut être acheminé aux éléments de transformation (TE_0, TE_1, ...) d'un premier groupe (G_0) et un signal d'entrée inversé (input') aux éléments de transformation (TE_16, TE_17, ...) d'un deuxième groupe (G_1).

8. Dispositif (100) selon l'une des revendications 6 à 7, **caractérisé en ce que** les automates d'état (ZA, ZA') des éléments de transformation (TE_0, TE_1, ... ; TE_16, TE_17, ...) qui appartiennent à des groupes (G_0, G_1) différents ne sont pas identiques les uns aux autres.

9. Dispositif (100) selon l'une des revendications précédentes, **caractérisé en ce qu'**au moins un, mais de préférence tous les automates d'état (ZA) peuvent à chaque fois être initialisés avec un état de départ (init) pouvant être prédéfini.

10. Dispositif (100) selon la revendication 9, **caractérisé en ce que** l'état de départ (init) peut être enregistré dans une mémoire secrète (102) et peut être transmis dans le ou les automates d'état (ZA) pour l'initialisation.

11. Dispositif (100) selon la revendication 10, **caractérisé en ce que** les automates d'état (ZA), après l'initialisation avec l'état de départ (init), peuvent être chargés avec un signal d'entrée aléatoire (input_rnd).

12. Dispositif (100) selon l'une des revendications 9 à 11, **caractérisé en ce que** tous les automates d'état (ZA, ZA') peuvent à chaque fois être initialisés avec un état de départ (init) pouvant être prédéfini, chaque automate d'état pouvant être initialisé avec un autre état de départ individuel.

13. Dispositif (100) selon la revendication 12, **caractérisé en ce que** les états de départ individuels des automates d'état (ZA, ZA') peuvent être permutés entre eux, notamment de manière aléatoire et/ou en fonction d'une clé secrète.

14. Dispositif (100) selon l'une des revendications précédentes, **caractérisé en ce que** le dispositif (100) est réalisé au moins partiellement sous la forme d'un arrangement de circuit avec des composants électroniques et/ou optiques de préférence monolithiques intégrés.

15. Dispositif (100) selon la revendication 14, **caractérisé en ce que** de tels groupes de composants et/ou les lignes de données qui les mettent en contact, lesquels réalisent les éléments de transformation (TE_0, TE_1, ...) ou leurs automates d'état (ZA), sont configurés de la même manière, notamment sous la forme de structures répétitives dans une implantation correspondant à l'arrangement de circuit.

16. Dispositif selon l'une des revendications 14 à 15, **caractérisé en ce que** des portions de ligne de lignes d'horloge et/ou de lignes de données et/ou de lignes d'alimentation, qui sont reliées avec les groupes de composants réalisant les plusieurs éléments de transformation (TE_0, TE_1, ...) ou leurs automates d'état (ZA), sont accordées les unes sur les autres de telle sorte que les signaux transmis sur les portions de ligne depuis une borne commune (CLK, OUT) parviennent simultanément aux différents groupes.

17. Dispositif (100) selon l'une des revendications précédentes, **caractérisé en ce qu'**au moins un automate d'état (ZA, ZA'), de préférence cependant tous les automates d'état (ZA, ZA'), est réalisé au moyen d'un registre à décalage (200, 200_1, 200_2, 200_3, 200_4) à contre-réaction non linéaire, de préférence muni de plusieurs entrées, NLMISR.

18. Dispositif (100) selon la revendication 17, **caractérisé en ce que** le NLMISR (200) présente une pluralité d'éléments de mémoire (204a, 204b, 204c, 204d) branchés en série, de préférence réalisés sous la forme de bascules bistables, et une unité d'inversion (210, 210') qui est configurée pour modifier au moins une branche de contre-réaction du NLMISR (200) en fonction du signal d'entrée (input[0], input[1], input[2], input[3]) de telle sorte qu'un polynôme associé à l'état du signal d'entrée (input[0], input[1], input[2], input[3]) peut être réalisé par le NLMISR (200).

19. Dispositif (100) selon l'une des revendications 17 à 18, **caractérisé en ce que** le NLMISR (200) est configuré pour traiter un signal d'entrée (input_0) de 4 bits de large et pour réaliser, au choix, les polynômes primitifs x⁴+x³+1 et x⁴+x+1.

20. Dispositif (100) selon l'une des revendications 17 à 19, **caractérisé en ce que** le NLMISR (200) est configuré pour traiter un signal d'entrée (input_1) de 3 bits de large et pour réaliser, au choix, les polynômes primitifs x³+x+1 et x³+x²+1.

21. Procédé pour former une signature (S) à partir d'un signal d'entrée (input), **caractérisé en ce que** le signal d'entrée (input) et/ou un signal dépendant du signal d'entrée (input') est à chaque fois acheminé à l'entrée de plusieurs éléments de transformation (TE_0, TE_1, ...) présentant à chaque fois un automate d'état (ZA), **en ce que** tous les automates d'état (ZA) sont du même type et sont de préférence initialisés de telle sorte que chaque automate d'état (ZA) présente toujours à chaque fois un autre état que tous les autres automates d'état (ZA), et **en ce que** la signature (S) est formée en fonction des informations d'état d'au moins un automate d'état (ZA).

22. Procédé selon la revendication 21, **caractérisé en ce que** le nombre d'éléments de transformation (TE_0, TE_1, ..., TE_15) utilisés est égal au nombre maximum d'états différents possibles (Z0, Z1, ..., Z15) de l'automate d'état (ZA).

23. Procédé selon l'une des revendications 21 à 22, **caractérisé en ce que** le signal d'entrée (input) est acheminé aux éléments de transformation (TE_0, TE_1, ... ; TE_16, TE_17, ...) en parallèle sous la forme de mots de données dont la longueur peut être prédéfinie et/ou que la signature (S) est formée sous la forme d'un enchaînement de mots de données représentant les informations d'état des automates d'état (ZA) de plusieurs éléments de transformation (TE_0, TE_1, ... ; TE_16, TE_17, ...).

24. Procédé selon l'une des revendications 21 à 23, **caractérisé en ce que** chaque automate d'état (ZA) transite d'un état initial (Z8) en un état suivant (Z9) en fonction du signal d'entrée (input, input') de telle sorte que pour un signal d'entrée (input, input') quelconque pouvant être prédéfini, un état suivant (Z9) explicite est à chaque fois adopté, l'existence de deux états initiaux différents qui, avec le même signal d'entrée (input, input'), mènent au même état suivant (Z9), étant notamment impossible.

25. Procédé selon l'une des revendications 21 à 24, **caractérisé en ce que** plusieurs groupes (G_0, G_1) d'éléments de transformation (TE_0, TE_1, ... ; TE_16, TE_17, ...) sont prévus, le même signal d'entrée (input) et/ou le même signal dépendant du signal d'entrée (input') étant à chaque fois acheminé à tous les éléments de transformation (TE_0, TE_1, ... ; TE_16, TE_17, ...) du même groupe (G_0, G_1), le signal d'entrée (input) étant notamment acheminé aux éléments de transformation (TE_0, TE_1, ...) d'un premier groupe (G_0) et un signal d'entrée inversé (input') aux éléments de transformation (TE_16, TE_17, ...) d'un deuxième groupe (G_1).

26. Procédé selon l'une des revendications 21 à 25, **caractérisé en ce qu'**au moins un, mais de préférence tous les automates d'état (ZA) sont à chaque fois initialisés avec un état de départ (init) pouvant être prédéfini, chaque automate d'état (ZA) à l'intérieur d'un groupe (G_0, G_1) étant notamment initialisé avec un autre état de départ individuel.

27. Procédé selon la revendication 26, **caractérisé en ce que** l'état de départ (init) est enregistré dans une mémoire secrète (102) et est transmis dans le ou les automates d'état (ZA) pour l'initialisation.

28. Procédé selon l'une des revendications 26 à 27, **caractérisé en ce que** les automates d'état (ZA), après l'initialisation avec l'état de départ (init), sont chargés avec un signal d'entrée aléatoire (input_rnd).

29. Procédé selon l'une des revendications 26 à 28, **caractérisé en ce que** les états de départ individuels des automates d'état (ZA) sont permutés entre eux, notamment de manière aléatoire et/ou en fonction d'une clé secrète.
